# EUROPÄISCHE PATENTSCHRIFT

(11) **EP 3 551 313 B1**
(45) Veröffentlichungstag und Bekanntmachung des Hinweises auf die Patenterteilung: **25.11.2020**
(21) Anmeldenummer: 17818082.4
(22) Anmeldetag: 06.12.2017
(51) Int. Cl.: B01D 35/26, B01D 29/70, C02F 1/28

(54) **FILTERMODUL, FILTERMODUL-SYSTEM UND VERFAHREN ZUR BINDUNG VON PARTIKELN EINES STOFFGEMISCHS**
FILTER MODULE, FILTER MODULE SYSTEM AND METHOD OF BINDING PARTICLES OF A MIXTURE
MODULE DE FILTRATION, SYSTÈME DE MODULE DE FILTRATION ET PROCÉDÉ DE FIXATION DES PARTICULES D'UN MÉLANGE

(30) Priorität: 09.12.2016 DE 102016014657; 07.09.2017 DE 102017215813
(43) Veröffentlichungstag der Anmeldung: 16.10.2019
(73) Patentinhaber: Fachhochschule Kiel, 24149 Kiel (DE)
(72) Erfinder: WEYCHARDT, Jan Henrik, 24937 Flensburg (DE)
(74) Vertreter: Wallinger, Michael
(86) Internationale Anmeldenummer: PCT/EP2017/081724
(87) Internationale Veröffentlichungsnummer: WO 2018/104398

(56) Entgegenhaltungen:
- EP-A1- 1 426 089
- US-A- 5 350 526
- US-A- 5 614 092
- US-A- 5 925 258
- US-B1- 6 190 569

## Beschreibung

Die Erfindung betrifft ein Filtermodul zur Bindung von Partikeln, ein Filtermodul-System aus mindestens zwei derartigen Filtermodulen sowie ein Verfahren zur Bindung von Partikeln eines Stoffgemischs. Die Erfindung eignet sich insbesondere zur Filterung von Feinststäuben aus einem partikelbehafteten Aerosol oder Fluid.

Das Filtern kleinster Partikel ist problematisch, da diese sich in Luft oder einem anderen Medium ähnlich träge verhalten wie eine Stahlkugel in Honig - sie haben auch bei kleinsten Strömungsgeschwindigkeiten nicht ausreichend Trägheit, um bei der Umlenkung an einer Filterfaser an diese zu stoßen und haften zu bleiben. An Stelle der Trägheit müssen dann z. B. Adhäsionseffekte oder die Brown'sche Molekularbewegung wirksam werden. Da es sich hier um verschiedene physikalische Effekte handelt, ist eine für jede Partikelgröße gleich effektive Filterwirkung nicht gegeben.

Eine Anwendung für eine derartige Filterung ist die Entfernung von Mikro-Plastikpartikeln aus den Meeren, welche ein globales und aus ökologischer Sicht sehr dringendes Problem darstellt.

Aus dem Stand der Technik ist die sogenannte Tangentialflussfiltration, auch Cross-Flow-, Tangential-Flow- oder Querstromfiltration, bekannt.

Bei der Querstromfiltration wird eine zu filtrierende Suspension, d. h. ein heterogenes Stoffgemisch aus einer Flüssigkeit und darin verteilten Partikeln, mit einer relativ hohen Geschwindigkeit parallel zu einer Membran oder einem Filtermedium gerichtet gepumpt und das gefilterte Stoffgemisch, hier auch Filtrat genannt, quer zur Fließrichtung abgegeben, bis die Membran zugesetzt ist.

Während bei gewöhnlichen Filtern die abzuscheidenden Feststoffe als Filterkuchen gewonnen werden, kann in der Querstromfiltration der Feststoff nur soweit konzentriert werden, dass die Suspension noch pumpbar ist. Das Filtrat ist in beiden Fällen frei von Feststoffen. Der die Membran nicht passierende Teil des Flüssigkeitsstroms wird als Retentat bezeichnet.

Weiterhin wird im Stand der Technik mit Hilfe einer Zirkulationspumpe das unfiltrierte Produkt solange durch die Kapillaren eines Filters zirkuliert, bis die Trübstoffe im Retentat so konzentriert sind, dass eine Entleerung und Reinigung erforderlich wird. Oszillierende Bewegungen am Filter sind derzeit nur für die Reinigung eines Staubfilters bekannt, wie sie z. B. durch die DE 10 2010 026 486 A1 gezeigt werden.

Weiter sind aus dem Stand der Technik die Prinzipien einer PeristaltikPumpe für medizinische Anwendungen ohne Filter, wie in der DE 699 15 869 T2, oder Peristaltik-Schlauchpumpen mit getrennten Filtern, wie in der US 8,211,047 B2 oder US 6,190,569 B1 gezeigt, bekannt.

Die US 6,190,569 B1 zeigt beispielsweise eine peristaltische Pumpe mit einem durchlässigen Schlauch, in welchen ein Gemisch aus einer Flüssigkeits- und einer Feststoffkomponente eingeleitet wird. Durch umlaufende Kompressionsmittel zur Kompression des Schlauchs wird die Flüssigkeitskomponente teilweise aus der Wandung des Schlauchs herausgepresst und dadurch das Gemisch in dem Schlauch konzentriert.

Auch bekannt sind passive Filterverfahren in Kombination mit Pumpen sowie Phänomene der Natur, die durch die Bionik ebenfalls Anregungen geben, eine Querstromfiltration wie bei planktonfiltrierenden Tieren, z. B. Fischen, auf technischem Wege abzubilden.

Der Erfindung liegt die Aufgabe zugrunde, ein verbessertes Filtermodul, ein verbessertes Filtermodul-System und ein verbessertes Verfahren zur Bindung von Partikeln eines Stoffgemischs bereitzustellen.

Diese Aufgabe wird durch das Filtermodul, das Filtermodul-System und das Verfahren gemäß den unabhängigen Ansprüchen gelöst. Vorteilhafte Ausgestaltungen der Erfindung sind in den Unteransprüchen enthalten.

Die Erfindung basiert auf dem Ansatz, ein offenporiges Medium in einem Gehäuse oder innerhalb einer Wandung durch eine Relativbewegung gegenüber einer Verformungseinheit, insbesondere periodisch, zu verformen und auf diese Weise eine Bewegung des zu filternden Stoffgemischs durch das offenporige Medium zu erzeugen. Auf diese Weise wird eine hohe Kontaktwahrscheinlichkeit zwischen den Partikeln des Stoffgemischs und dem offenporigen Medium herbeigeführt und das Stoffgemisch durch das offenporige Medium gefiltert.

Dieser Grundgedanke der Erfindung wird durch zwei Ausführungskonzepte näher ausgestaltet, welche im Nachfolgenden beschrieben werden. Dabei können Merkmale und Eigenschaften des ersten Ausführungskonzepts auch auf das zweite Ausführungskonzept übertragen werden und umgekehrt, soweit dies technisch möglich und sinnvoll ist.

Das Filtermodul kann prinzipiell eine beliebige Form haben. Als Achse des Filtermoduls wird allgemein die gewünschte Strömungsrichtung zwischen Ein- und Auslass definiert. Das Filtermodul wird vorzugsweise quer zu dieser Achse, vorzugsweise periodisch und weiter vorzugsweise sinusförmig, in Strömungsrichtung wandernd verformt. Der gewünschte Grad der Verformung kann als ein bestimmter Prozentsatz der jeweiligen lokalen Querausdehnung, d. h. Dicke, des offenporigen Mediums, definiert werden. Dieser entspricht dann dem gewünschten Verformungsgrad einer jeder einzelnen Pore in dem offenporigen Medium.

Das erfindungsgemäße Filtermodul bzw. das System mehrerer erfindungsgemäßer Filtermodule ist für die unterschiedlichsten Anwendungen bei der Filterung insbesondere von Fluiden und/oder Aerosolen und Bindung von Partikeln industriell verwertbar.

Bevorzugte Einsatzgebiete der Erfindung sind Bereiche, in denen mit hohem Partikelaufkommen oder großen Konzentrationsgradienten gerechnet werden muss. Durch das permanente Abströmen des Retentats stellt sich bei nicht weiterem Konzentrieren ein Gleichgewichtswert ein, der lange gehalten werden kann.

Diese Art der Bindung von Partikeln hat eine große Bedeutung in Anwendungsgebieten wie Medizintechnik, Reinstraumtechnik, Nanotechnik und Offshoretechnik. Konkrete Anwendungen ergeben sich beispielsweise in der Getränkefiltration, Dialyse, Mikrofiltration, Ultrafiltration, Nanofiltration, Gastrennung, Pervaporation, Umkehrosmose, Diafiltration und dergleichen.

Insgesamt wird durch die Erfindung auf einfache und zuverlässige Weise eine Filtration des Stoffgemischs erreicht.

Das erfindungsgemäße Filtermodul und das erfindungsgemäße Verfahren stellen insbesondere ein effektives Lösungsprinzip für das eingangs erwähnte globale Problem der Verunreinigung der Meere durch Mikro-Plastikpartikel dar.

Das Filtermodul gemäß dem ersten Ausführungskonzept der Erfindung weist ein im Wesentlichen zylindrisches Gehäuse auf, in welches ein im Wesentlichen zylindrisch geformtes, offenporiges Medium eingebracht ist, welches dazu ausgebildet ist, ein Stoffgemisch zu halten, insbesondere ein Schwammmedium, ein offenporiger Schaum und/oder ein Filtermedium für ein Stoffgemisch, welches durch ein insbesondere mehrphasiges Stoffgemisch, vorzugsweise ein Aerosol und/oder Fluid, durchströmbar ist. Weiterhin weist das Filtermodul zumindest einen Einlass und zumindest einen Auslass für ein Stoffgemisch auf. Erfindungsgemäß weist das Filtermodul genau einen Auslass für das Stoffgemisch auf.

In einer bevorzugten Ausführung des ersten Ausführungskonzepts der Erfindung wird ein offenporiger Schaum als Medium verwendet. Darin sind die Verbindungen zwischen den Poren kleiner als diese selbst. Insbesondere wird dann jede Filterpore vorzugsweise in jedem Umlauf einmal auf ein Volumen gegen Null verringert und entlässt somit das von ihr gehaltene, partikelbehaftete Stoffgemisch an die nächste Filterpore. Das Anhaften von Partikeln und damit eine Filterung des Stoffgemischs erfolgt somit allein schon mit hoher Wahrscheinlichkeit aus dem Prinzip der Trägheit.

In einer bevorzugten Ausführung des ersten Ausführungskonzepts der Erfindung ist das Medium elastisch und/oder kompressibel. Insbesondere kann das Medium ein Substrat oder ein Gel sein.

Das Medium kann auch reinigbar sein z. B. durch eine Flüssigkeit, mit der es benetzt wird.

Das offenporige Medium bildet im Wesentlichen einen Zylinder, vorzugsweise einen Hohlzylinder. In einer bevorzugten Ausführung des ersten Ausführungskonzepts der Erfindung bildet das offenporige Medium zumindest zwei, bevorzugt zumindest vier, weiter bevorzugt zumindest sechs Zylindersektoren (d. h. "Kuchenstücke", deren Höhe sich entlang der Zylinderachse des Mediums erstreckt). Die Anzahl der Zylindersektoren ist jedoch nach oben nicht beschränkt.

Vorzugsweise nehmen die Zylindersektoren zusammengefügt die Form des Zylinders bzw. Hohlzylinders des Mediums ein, das in dem Gehäuse aufgenommen ist.

In einer weiteren bevorzugten Ausführung des ersten Ausführungskonzepts der Erfindung sind benachbarte Zylindersektoren jeweils bezüglich des Stoffgemischs gegeneinander abgedichtet, vorzugsweise durch eine Hülle.

Es ist jedoch auch möglich, dass das offenporige Medium nur einen einzigen Zylindersektor bildet, der somit einen Umfangswinkel von 360 Grad überstreicht. Vorzugsweise weist dieser eine Zylindersektor eine bezüglich des Stoffgemischs dichte Wand auf, die sich in einer Ebene durch die Zylinderachse des Mediums in radialer Richtung auf einer Seite des Zylinders von dessen innerer zu dessen äußerer Umfangsfläche erstreckt. Anders ausgedrückt ergäbe sich diese Anordnung des offenporigen Mediums auch dann, wenn man in der oben beschriebenen Anordnung mit mehreren Zylindersektoren sämtliche Zylindersektoren miteinander vereinigen würde, indem man alle Hüllenteile, die die Zylindersektoren voneinander abtrennen, bis auf ein solches Hüllenteil weglassen würde.

Durch diese Anordnung wird vermieden, dass bei der Förderung des Stoffgemischs durch das offenporige Medium keine um die Zylinderachse umlaufende Strömung entsteht, insbesondere dann, wenn die Verformungseinheit eine Schraube ist oder einen Exzenter aufweist. Es werden in diesem Fall also nicht mehrere Zylindersektoren zur Leistungssteigerung "parallelgeschaltet", sondern es wird das offenporige Medium in dem einzigen Zylindersektor zur Effizienzsteigerung intern abgeteilt.

Ein offenporiges Medium im Sinne der Erfindung kann auch ein nanoporöser Partikelfilter oder ein komprimierbares Gel, bevorzugt ein Aerogel oder ein Molekülgitter, sein. Bei einem Molekülgitter handelt es sich dabei bevorzugt um eine räumliche molekulare Gitterstruktur-vorzugsweise um ein Kohlenstoff-"Fußball"-Molekül, welches periodisch beliebig vergrößert worden ist -, die bestimmte chemische, physikalische und/oder biologische Merkmale, insbesondere zur Bindung oder chemischen Veränderung des zu filternden Stoffgemischs, aufweist.

Als Partikel, Teilchen oder kleine Festkörper werden disperse Materialien bezeichnet, die sich von einem umgebenden, kontinuierlichen Medium durch eine Phasengrenzfläche unterscheiden, z. B. die festen oder flüssigen Bestandteile von Aerosolen, die festen Bestandteile von Suspensionen, die Teilchen von Pulvern, aber auch Flüssigkeitstropfen in Emulsionen.

Die Geometrie und das Material des offenporigen Mediums ist vorzugsweise auf die Geometrie und die Materialeigenschaften der zu bindenden Partikel abgestimmt, so dass das Stoffgemisch in dem Medium, bevorzugt in den offenporigen Bereichen, temporär oder permanent besonders gut gehalten wird. Das offenporige Medium ist vorzugsweise geometrisch an das zylindrische Gehäuse angepasst, so dass die Außenhaut des offenporigen Mediums oder eine das Medium umgebende Hülle an der Innenwand des Gehäuses anliegen kann.

Das offenporige Medium ist vorzugsweise derart im Gehäuse eingebracht, dass es entlang der Zylinderachse des Gehäuses und/oder in radialer Richtung zusammenpressbar und entspannbar ist.

Weiterhin weist das Filtermodul gemäß dem ersten Ausführungskonzept der Erfindung zumindest eine Verformungseinheit auf, wobei das offenporige Medium durch die Verformungseinheit, bevorzugt zumindest entlang der Zylinderachse des Gehäuses und/oder in radialer Richtung, geometrisch verformbar ist.

In einer bevorzugten Ausführungsform des ersten Ausführungskonzepts der Erfindung ist die zumindest eine Verformungseinheit relativ zu dem Gehäuse und dem Medium bewegbar.

Bei der Relativbewegung kann die zumindest eine Verformungseinheit in Ruhe sein, und das Gehäuse und das Medium bewegen sich. Bevorzugt ist es jedoch, dass das Gehäuse und das Medium in Ruhe sind und die zumindest eine Verformungseinheit sich bewegt.

Die Verformung des offenporigen Mediums erfolgt dabei vorzugsweise mechanisch, z. B. durch eine Welle mit einem Exzenter, elektromagnetisch, z. B. durch magnetisierbare Körper, pneumatisch und/oder hydraulisch, z. B. durch Schläuche. Auch der Einsatz von Massen zur Verformung des offenporigen Mediums durch Schwerkraft ist möglich. Dementsprechend ist die Verformungseinheit in einer bevorzugten Ausführung des ersten Ausführungskonzepts der Erfindung eine Welle, eine Schraube oder ein Schlauchkörper und/oder weist wenigstens einen Exzenter auf.

Strömungsrichtungen lassen sich dabei auch durch gezielte Verformungen des Mediums beeinflussen. Die Verformung erfolgt dabei bevorzugt periodisch, ist jedoch darauf nicht beschränkt.

Bei der Verformung wird das offenporige Medium durch die Verformungseinheit in sich und auch in der Porigkeit selbst geometrisch verändert. Bildlich ist dies z. B. mit dem Walzen eines Back-/Hefeteigs vergleichbar, wobei eine Walze entlang der Zylinderachse und in radialer Richtung auf dem offenporigen Medium abgerollt wird und sich das Medium nach dem Walzvorgang wieder entspannen kann.

Die Verformungseinheit kann unterschiedlich beschaffen sein. In einer bevorzugten Ausführung des ersten Ausführungskonzepts der Erfindung weist die Verformungseinheit eine helixartige Geometrie auf, z. B. in Form einer Welle entlang der Zylinderachse des Gehäuses, die dazu ausgebildet ist, auf das Medium verformend einzuwirken und die dadurch das Stoffgemisch durch das Medium, in das Medium hinein und/oder aus dem Medium heraus bewegt.

Dabei wirkt die Verformungseinheit durch die Rotation um die Zylinderachse im Gehäuse auf das offenporige Medium vorzugsweise derart, dass ein in einer Richtung der Zylinderachse gerichteter Förderprozess für das Stoffgemisch erzeugt wird.

Die Verformungseinheit ist bevorzugt von einer bezüglich des Stoffgemischs gasdichten Hülle umgeben, insbesondere dann, wenn die Verformungseinheit einen Exzenter aufweist.

Weiterhin betrifft das erste Ausführungskonzept der Erfindung ein Verfahren, bei dem ein Stoffgemisch, z. B. ein Aerosol oder Fluid, welches Partikel aufweist, die zu binden sind, kontinuierlich unidirektional durch bzw. in ein offenporiges Medium bewegt wird, wobei einzelne, vorzugsweise durch ihre Größe definierte Partikel das Medium durchdringen bzw. in diesem gehalten werden.

Partikel können dabei durch unterschiedliche Porengeometrien permanent oder kurzzeitig gehalten werden. Da sich die Porengeometrien bei der jeweiligen Verformung verändern, kann es zu einer Partikelwanderung kommen, bis die Porengeometrie ein Partikel optimal absorbiert/hält.

Dies kann auch durch einen mehrschichtigen Aufbau des offenporigen Mediums erfolgen, vorzugsweise mit einer zur Zylinderachse rotationssymmetrischen Geometrie des offenporigen Mediums und weiter vorzugsweise mit unterschiedlichen Porenstrukturen, welche von einer Schicht zur nächsten relativ zueinander beweglich sind.

Weiter sind offenporige Medien mit unregelmäßiger oder statistischer Verteilung der Poren und/oder Porengrößen, die in Relation zu einer Partikelgrößenverteilung steht, einsetzbar. Dies geschieht insbesondere mit der Annahme, dass sowohl die Partikel als auch die Poren auf einer logarithmisch skalierten Abszisse normalverteilt sind. Zur Optimierung der Filter-/Haftwirkung werden insbesondere die Mittelwerte so aufeinander abgestimmt, dass die Partikel einerseits das Medium nicht schon nahe am Einlass dichtsetzen, andererseits aber die Kollisions- und somit die Anhaftwahrscheinlichkeit über einem Durchgang maximal ist.

Der Ansaug- und Förderprozess des Stoffgemischs erfolgt bevorzugt von einem Einlass aus in Volumenstromrichtung zu einem Auslass des jeweiligen Moduls. Beim Ansaugprozess geschieht der Eintritt des Stoffgemischs an einer Stelle des offenporigen Mediums, an der ein Zylindersektor von einem zusammengepressten Zustand in einen entspannten Zustand wechselt.

In einer weiteren bevorzugten Ausführung des ersten Ausführungskonzepts der Erfindung ist der Einlass und/oder der Auslass für das Stoffgemisch jeweils in einem Deckel mit zumindest einer Öffnung eingebracht, der sich vorzugsweise mit der Verformungseinheit relativ zu dem offenporigen Medium und dem Gehäuse um die Zylinderachse bewegt. Weiter vorzugsweise ist der Deckel jeweils mit der Verformungseinheit koppelbar.

Die Form der Öffnung ist bevorzugt sinusförmig oder sichelförmig und ist weiterhin bevorzugt an die geometrischen Einlass- bzw. Auslassbedingungen der sich dynamisch verformenden Geometrie des offenporigen Mediums angepasst, um einen Rückfluss des Stoffgemischs zu verhindern.

Der Deckel kann auch als Gitter oder Netz ausgebildet werden, wenn der Ort des Einlasses z. B. über den Einsatz einer Vorkammer bestimmbar ist und der Rücklauf für alle anderen Sektoren aufgefangen wird und dem Einlassort wieder zugefügt wird.

In einer bevorzugten Ausführungsform weist der Auslass des Filtermoduls eine Kupplung auf, insbesondere eine Klauenkupplung, zur Verhinderung eines Rückflusses. Vorzugsweise ist dadurch ein Antrieb einkoppelbar, es sind mehrere Module über die jeweiligen Wellen koppelbar gehalten, und ein Drehmoment ist in derselben Drehrichtung von einer Welle auf die folgende Welle übertragbar. Damit ist der Wechsel eines Filtermoduls aus einem Verbund von Filtermodulen durch einfaches Herausnehmen und Einfügen des Filtermoduls möglich.

Das Verfahren gemäß dem ersten Ausführungskonzept der Erfindung zur Bindung von Partikeln eines Stoffgemischs in zumindest einem Medium durch ein Filtermodul weist zumindest folgende Schritte auf:
a. Bereitstellen des Stoffgemischs an einem der Einlässe des Gehäuses;
b. Ansaugen des Stoffgemischs, indem die zumindest eine Verformungseinheit relativ zu dem Gehäuse und dem Medium bewegt wird;
c. Binden der Partikel im Medium;
d. Auspumpen des zumindest teilweise von Partikeln befreiten Stoffgemischs an einem der Auslässe;
e. Beenden oder Fortsetzen mit f.;
f. Austauschen des Mediums gegen ein anderes Medium;
g. Fortsetzen mit a.

In einer bevorzugten Ausführungsform des Verfahrens zur Bindung von Partikeln eines Stoffgemischs wird durch die Einwirkung der Verformungseinheit auf das offenporige Medium eine vorzugsweise sinuswellenartige Verformung des offenporigen Mediums mit einer pumpenden Bewegung bevorzugt in Richtung der Zylinderachse erzeugt. Zusätzlich wird durch eine bevorzugt helixförmige Rotation um die Zylinderachse, ähnlich einem Korkenzieher, ein Vortrieb des Stoffgemischs entlang der Zylinderachse erzeugt.

In einem Filtermodul-System gemäß dem ersten Ausführungskonzept der Erfindung aus mindestens zwei Filtermodulen sind die Filtermodule gemäß dem ersten Ausführungskonzept der Erfindung derart hintereinander geschaltet, dass jeweils ein Auslass eines Filtermoduls mit einem Einlass des folgenden Filtermoduls lösbar, kraft- und stoffgemischübertragend verbunden ist. Auf diese Weise kann die Filterleistung durch den Einsatz mehrerer Filtermodule gemäß dem ersten Ausführungskonzept der Erfindung vervielfacht werden.

Das Verfahren gemäß dem ersten Ausführungskonzept der Erfindung zur Bindung von Partikeln eines Stoffgemischs in zumindest einem Medium durch ein Filtermodul-System weist zumindest folgende Schritte auf:
a. Bereitstellen des Stoffgemischs an einem Einlass des ersten Filtermoduls;
b. Auspumpen des Stoffgemischs aus jedem Filtermodul an einem jeweiligen Auslass und Ansaugen des Stoffgemischs in das jeweils folgende Filtermodul an einem jeweiligen Einlass, indem die Verformungseinheit und/oder die Deckel eines jeden Filtermoduls relativ zu dem Gehäuse und dem Medium des jeweiligen Filtermoduls gemeinsam bewegt werden;
c. Binden der Partikel in jedem Filtermodul in dem jeweiligen Medium;
d. Auspumpen des zumindest teilweise von Partikeln befreiten Stoffgemischs an einem Auslass des letzten Filtermoduls;
e. Beenden oder Fortsetzen mit f.;
f. Austauschen des Mediums in wenigstens einem Filtermodul gegen ein anderes Medium;
g. Fortsetzen mit a.

Das Filtermodul gemäß dem zweiten Ausführungskonzept der Erfindung zur Bindung von Partikeln aus einem partikelbehafteten Stoffgemisch, insbesondere aus einem Aerosol oder aus einem partikelbehafteten Fluid, weist auf:
- eine Mehrzahl von Filterelementen, wobei jedes Filterelement mit einem, vorzugsweise offenporigen, Medium, insbesondere einem Schwammmedium, einem offenporigen Schaum, einem Gel, einem Molekülgitter und/oder einem Filtermedium für das Stoffgemisch, gefüllt und durch eine für das Stoffgemisch und für das Medium dichte Wandung umschlossen ist und zumindest einen Einlass und zumindest einen Auslass für das Stoffgemisch aufweist, wobei jedes Filterelement im Wesentlichen in Richtung seiner Längsausdehnung von dem zumindest einen Einlass zu dem zumindest einen Auslass von dem Stoffgemisch durchströmbar ist, und
- eine Verformungseinheit, wobei die Filterelemente und insbesondere das Medium darin durch die Verformungseinheit verformbar sind.

Bezüglich des Mediums wird auf die entsprechenden Erläuterungen zum ersten Ausführungskonzept der Erfindung verwiesen, welche gleichermaßen auch für das zweite Ausführungskonzept gelten.

Gemäß dem zweiten Ausführungskonzept der Erfindung sind die Filterelemente bezüglich ihrer Längsausdehnung nebeneinander angeordnet und jeweils benachbarte Filterelemente entlang ihrer jeweiligen im Wesentlichen parallel zu ihrer Längsausdehnung verlaufenden und einander zugewandten Teile ihrer Wandungen miteinander verbunden.

Unter einer Verbindung ist dabei eine mechanische, insbesondere stoffschlüssige Verbindung zu verstehen, vorzugsweise durch Verkleben oder Verschweißen der Wandungsteile miteinander, die eine Relativbewegung der miteinander verbundenen Wandungsteile gegeneinander verhindert.

Der Einsatz mehrerer nebeneinander angeordneter Filterelemente, die miteinander verbunden sind, aber an den Verbindungsstellen durch ihre Wandungen dennoch eine Strömung des Stoffgemischs aus einem Filterelement in ein benachbartes verhindern, ist vorteilhaft, damit sich innerhalb des Filtermoduls keine Strömungen quer zur Förderrichtung einstellen.

Vorzugsweise haben die Filterelemente im Wesentlichen die Form von langgestreckten Quadern oder im Wesentlichen die Form von langgestreckten Zylindern, deren Mantelflächen ggf. an den Verbindungsstellen mit den jeweiligen benachbarten Filterelementen etwas "flachgedrückt" werden.

Gemäß dem zweiten Ausführungskonzept der Erfindung ist außerdem die Verformungseinheit dazu ausgebildet, die Filterelemente im Wesentlichen bezüglich deren Längsausdehnung periodisch, bevorzugt wellenförmig und besonders bevorzugt im Wesentlichen sinusförmig, zu verformen, wobei die Verformungsbewegungen der Filterelemente gegeneinander phasenversetzt sind.

Der Phasenversatz kann dabei, insbesondere auch fließend, an einem einzelnen Filterelement geschehen, d. h. das betreffende Filterelement ist an verschiedenen Stellen quer zu seiner Längsausdehnung Verformungsbewegungen mit verschiedenen Phasen ausgesetzt, wobei sich der Phasenversatz zwischen diesen Verformungsbewegungen insbesondere kontinuierlich ändern kann. Dies dient zur gegenseitigen Kompensation von Pulsationen.

Bei der Verformung wird das Medium durch die Verformungseinheit in sich und ggf. auch in der Porigkeit selbst geometrisch verändert. Bildlich ist dies beispielsweise mit dem Walzen eines Back-/Hefeteigs vergleichbar, wobei eine Walze entlang der Längsausdehnung des Filterelements auf dem Medium abgerollt wird und sich das Medium nach dem Walzvorgang wieder entspannen kann. Dabei wirkt die Verformungseinheit auf das Medium vorzugsweise derart, dass ein in Richtung der Längsausdehnung des Filterelements gerichteter Förderprozess für das Stoffgemisch erzeugt wird.

Bei dem Filtermodul gemäß dem zweiten Ausführungskonzept der Erfindung wird eine im Wesentlichen konstante Pumpwirkung erzielt. Eine besonders gleichmäßige Pumpwirkung ist bei rein sinusförmigen Wellen zu erwarten.

In einer bevorzugten Ausführung gemäß dem zweiten Ausführungskonzept der Erfindung sind die Verformungsbewegungen der Filterelemente derart gegeneinander phasenversetzt, dass sich auf den nebeneinander angeordneten Filterelementen entlang einer Reihe von Stellen auf gleicher Höhe bezüglich der Längsausdehnung der Filterelemente eine periodische, vorzugsweise wellenförmige, Verformungsbewegung ergibt.

Insbesondere weisen die Phasen zwischen benachbarten Filterelementen jeweils denselben, d. h. einen konstanten, Versatz auf.

Durch die periodischen und vorzugsweise wellenförmigen Verformungsbewegungen sowohl in Richtung der Längsausdehnung der Filterelemente als auch quer dazu ergeben sich in beiden Richtungen periodische Bewegungen, insbesondere Wellen und insbesondere sinusförmige Wellen, welche sich überlagern.

Im Gesamtbild wandern die Wellenfronten diagonal zur Längsausdehnung der Filterelemente.

In einer weiteren bevorzugten Ausführung gemäß dem zweiten Ausführungskonzept der Erfindung weist wenigstens ein Einlass und/oder ein Auslass wenigstens eines Filterelements auf der Oberfläche des Filterelements eine langgestreckte Form mit einer Längs- und/oder Querausdehnung in einer Richtung auf, die zwischen der zur Längsausdehnung des Filterelements quer verlaufenden Richtung und der Ausbreitungsrichtung der Wellenfronten liegt, vorzugsweise im Wesentlichen auf einer Winkelhalbierenden eines Winkels zwischen den beiden genannten Richtungen.

Eine solche Lage der Ein- und Auslässe ist vorteilhaft, da einerseits beim phasenversetzten Auftreffen der Verformungseinheit quer zur Längsausdehnung der Filterelemente mechanische Stöße entstehen und andererseits in Längsausdehnung der Filterelemente, d. h. in Strömungsrichtung des Stoffgemischs, maximale hydraulische Pulsationen auftreten. Durch die Wahl der Ein- und Auslässe zwischen diesen beiden Richtungen sind dagegen nur leichte mechanische und hydraulische Ungleichmäßigkeiten zu erwarten.

In einer weiteren bevorzugten Ausführung gemäß dem zweiten Ausführungskonzept der Erfindung weist das Filtermodul weiterhin wenigstens eine Befestigungseinrichtung, insbesondere wenigstens eine Schwinge, auf, durch die Teile der Wandungen der Filterelemente, insbesondere im Bereich der Einlässe der Filterelemente, gegenüber wenigstens einem ortsfesten Punkt außerhalb des Filtermoduls, insbesondere eingeschränkt beweglich, befestigbar sind.

Eine solche Befestigungseinrichtung ist insbesondere dann vorteilhaft, wenn die Verformungseinheit das Filterelement in Richtung von dessen Längsausdehnung scheren würde. Die Befestigungseinrichtung hält dann die Wand des Filterelementes in Position.

In einer weiteren bevorzugten Ausführung gemäß dem zweiten Ausführungskonzept der Erfindung weist die Verformungseinheit eine Vielzahl von Rollen mit wenigstens teilweise verschiedenen Durchmessern auf, die dazu eingerichtet sind, im Wesentlichen entlang der Längsausdehnung der Filterelemente auf den Filterelementen abzurollen und die Filterelemente dabei wenigstens teilweise unterschiedlich stark zu verformen.

Auf diese Weise kann die gewünschte Verformung reibungsarm erreicht werden. Die verschiedenen Durchmesser der Rollen bewirken beim Abrollen die periodische, insbesondere wellenförmige Verformungsbewegung.

In einer alternativen Ausführung sind über die Fläche der Filterelemente vertikal wirkende Aktuatoren verteilt, welche diese Verformungen erzeugen, ohne sich über die Fläche der Filterelemente hinweg zu bewegen. Die Aktuatoren können insbesondere mechanisch, elektrisch oder hydraulisch oder durch ein anderes Antriebsprinzips bewegt werden. In dieser Ausführung ist keine oder nur eine geringe Scherung der Filterelemente zu erwarten, so dass die oben genannte Befestigungseinrichtung nicht unbedingt erforderlich ist. Vorzugsweise sind die Aktuatoren gekoppelte hydraulische oder elektromechanische Linearantriebe, welche die gewünschte Kontur punktweise erzeugen.

In einer bevorzugten Variante dieser Ausführung ist die Vielzahl von Rollen auf einer Mehrzahl von, insbesondere parallelen, Achsen angeordnet. Die Rollen können somit mit individueller Drehzahl laufen.

Bevorzugt sind dabei wenigstens eine erste Achse und eine zweite, zu der ersten Achse benachbarte Achse parallel zueinander angeordnet, und für ein Paar aus einer ersten auf der ersten Achse angeordneten Rolle und einer zweiten, zu der ersten Rolle unmittelbar benachbarten und auf der zweiten Achse angeordneten Rolle ist der Abstand der beiden Achsen kleiner als die Summe aus dem Radius der ersten Rolle und dem Radius der zweiten Rolle.

Dies wird bevorzugt dadurch erreicht, dass die Rollen in axialer Richtung zwischen benachbarten Achsen gegeneinander versetzt sind und sich somit "durchdringen" können. Auf diese Weise können die erste und die zweite Achse einen sehr kleinen Abstand zueinander haben, so dass die Rollen sehr dicht und in hoher Anzahl auf den Achsen angeordnet werden können, wodurch sich wiederum eine große Auflagefläche auf den Filterelementen ergibt.

In einer weiteren bevorzugten Ausführung gemäß dem zweiten Ausführungskonzept der Erfindung ist die Mehrzahl von Filterelementen insgesamt hohlzylinderförmig angeordnet.

Durch die "endlose" Anordnung der Filterelemente in Form einer Zylindermantelfläche muss die Verformungseinheit, sofern sie relativ zu den Filterelementen bewegt wird, nach einer vollständigen Bewegung über die Fläche der Filterelemente nicht zum Anfang dieser Fläche zurückbewegt werden.

In einer bevorzugten Variante dieser Ausführung weist die Verformungseinheit ebenfalls eine Hohlzylinderform auf und berührt die Mehrzahl von Filterelementen auf deren Innenseite oder Außenseite, und die Filterelemente und die Verformungseinheit sind dazu ausgebildet, relativ zueinander zu rotieren.

Dies ergibt eine kompakte, mechanisch stabile und relativ einfach zu realisierende Ausführung des Filtermoduls. Vorzugsweise sind die Filterelemente in Ruhe und die Verformungseinheit rotiert relativ dazu, damit das zu filternde Stoffgemisch nicht auf die rotierenden Filterelemente übertragen bzw. das gefilterte Stoffgemisch nicht von diesen abgeführt werden muss. Alternativ ist es aber auch möglich, dass die Verformungseinheit in Ruhe ist und die Filterelemente relativ dazu rotieren.

Dabei weist das Filtermodul vorzugsweise wenigstens zwei bezüglich ihrer Längsausdehnung hintereinander angeordnete Filterelemente auf, und die wenigstens zwei Filterelemente sind entlang ihrer jeweiligen im Wesentlichen quer zu ihrer Längsausdehnung verlaufenden und einander zugewandten Teile ihrer Wandungen miteinander verbunden. Bei diesen Wandungsteilen handelt es sich vorzugsweise jeweils um eine in Richtung der Längsausdehnung gesehen vordere und eine hintere Stirnfläche des betreffenden Filterelements.

Insbesondere sind in axialer Richtung der Hohlzylinderform, in der die Filterelemente angeordnet sind, eine erste Anzahl von Filterelementen bezüglich ihrer Längsausdehnung nebeneinander und in Umfangsrichtung der Hohlzylinderform eine zweite Anzahl von Filterelementen bezüglich ihrer Längsausdehnung hintereinander angeordnet. Die zweite Anzahl beträgt dann also mindestens zwei.

Anders ausgedrückt ist eine erste Anzahl von nebeneinander liegenden Ringen von Filterelementen, welche jeweils aus einer zweiten Anzahl von hintereinander liegenden Filterelementen bestehen, auf einer Zylindermantelfläche angeordnet, wobei jedes Filterelement mit seinen Nachbarn an den Berührungsflächen verbunden ist.

Dabei ist bevorzugt die Anzahl der Perioden der periodischen und vorzugsweise wellenförmigen Verformung der Filterelemente im Wesentlichen bezüglich deren Längsausdehnung durch die Verformungseinheit während einer Umdrehung der Verformungseinheit relativ zu den Filterelementen größer, insbesondere um mindestens eins größer, als die Anzahl der hohlzylinderförmig bezüglich ihrer Längsausdehnung hintereinander angeordneten Filterelemente, also als die zweite Anzahl. Hierdurch wird die Durchströmung der Filterelemente mit dem Stoffgemisch pulsationsfreier.

In einer bevorzugten Variante derjenigen Ausführung der Erfindung gemäß dem zweiten Ausführungskonzept, bei der die Verformungseinheit auf Achsen angeordnete Rollen aufweist und die hohlzylinderförmig angeordneten Filterelemente relativ zu der ebenfalls hohlzylinderförmigen Verformungseinheit rotieren, wobei die Verformungseinheit die Mehrzahl von Filterelementen auf deren Innenseite berührt, ist auf der Innenseite der Verformungseinheit eine zentrale Walze angeordnet, welche dazu ausgebildet ist, auf jeder Achse jeweils wenigstens eine Rolle nach außen an die Filterelemente zu drücken.

Auf diese Weise werden auch die Achsen und damit auch die übrigen darauf angeordneten Rollen nach außen gedrückt. Die zentrale Walze kann auch selbst rotieren und dabei die Rollen reibschlüssig sowohl zu einer Rotation um die Achse der zentralen Walze als auch zu einer Rotation um deren eigene Achse antreiben. Das Filtermodul hat dann eine ähnliche Kinematik wie ein Planetengetriebe mit feststehendem Hohlrad.

Alternativ können aber auch die zentrale Walze feststehen und die Rollen über die Achsen formschlüssig sowohl zu einer Rotation um die Achse der zentralen Walze als auch zu einer Rotation um ihre eigene Achse angetrieben werden.

In einer weiteren bevorzugten Ausführung gemäß dem zweiten Ausführungskonzept der Erfindung ist die Verformungseinheit zur Verformung wenigstens eines im Wesentlichen parallel zur Längsausdehnung der Filterelemente verlaufenden Teiles der Wandungen der Filterelemente, entlang dessen zwei benachbarte Filterelemente miteinander verbunden sind, eingerichtet. Auf diese Weise lassen sich mit jedem Element der Verformungseinheit, welches den Kontakt zu den Filterelementen herstellt, gleichzeitig zwei Filterelemente verformen, wodurch der konstruktive Aufwand verringert wird.

Vorzugsweise ist die Verformungseinheit zur Verformung aller Teile der Wandungen, entlang derer benachbarte Filterelemente miteinander verbunden sind, eingerichtet. Weiter vorzugsweise ist die Verformungseinheit auch zur Verformung der im Wesentlichen parallel zur Längsausdehnung der Filterelemente verlaufenden äußeren Wandungen der außenliegenden Filterelemente eingerichtet.

Bei einem Verfahren gemäß dem zweiten Ausführungskonzept der Erfindung zur Bindung von Partikeln aus einem partikelbehafteten Stoffgemisch, insbesondere aus einem Aerosol oder aus einem partikelbehafteten Fluid, mit einem Filtermodul gemäß dem zweiten Ausführungskonzept der Erfindung wird zunächst das Stoffgemisch an wenigstens einem Einlass wenigstens eines Filterelements des Filtermoduls bereitgestellt. Das Medium in dem Filterelement wird durch die Verformungseinheit verformt, wodurch das Stoffgemisch an dem wenigstens einem Einlass in das Filterelement angesaugt wird, das Filterelement im Wesentlichen in Richtung seiner Längsausdehnung von dem Einlass zu einem Auslass von dem Stoffgemisch durchströmt wird, dabei Partikel aus dem Stoffgemisch in dem Medium gebunden werden und das zumindest teilweise von Partikeln befreite Stoffgemisch an dem Auslass ausgepumpt wird.

Weitere Vorteile, Merkmale und Anwendungsmöglichkeiten des ersten und zweiten Ausführungskonzepts der vorliegenden Erfindung ergeben sich aus der nachfolgenden, beispielhaften Beschreibung in Zusammenhang mit den Figuren. Es zeigen:
- Fig. 1: ein Ausführungsbeispiel für ein Filtermodul gemäß dem ersten Ausführungskonzept der Erfindung in perspektivischer, teilweise aufgeschnittener Ansicht mit fünf Schnittbildern A0 bis A4 in axialer Aufsicht als Schnittbild an verschiedenen Stellen durch das zylindrische Gehäuse;
- Fig. 2: ein Ausführungsbeispiel für den Schnitt in Hauptflussrichtung durch das Filtermodul gemäß Fig. 1 für einen Zylindersektor mit Bewegungsbildern T0 bis T4 des offenporigen Mediums;
- Fig. 3: ein schematisches, perspektivisches Verlaufsbild des Pumpvorgangs für die Zylindersektoren eines Filtermoduls gemäß Fig. 1.
- Fig. 4: Bewegungsbilder T0 bis T4 für einen einzelnen Zylindersektor in dem Filtermodul gemäß Fig. 1;
- Fig. 5: eine perspektivische Ansicht eines Filtermoduls gemäß dem zweiten Ausführungskonzept der Erfindung in fünf verschiedenen Verformungszuständen im Verlauf der periodischen, wellenförmigen Verformungsbewegung;
- Fig. 6: ein Ausführungsbeispiel für eine Verformungseinheit eines Filtermoduls gemäß dem zweiten Ausführungskonzept der Erfindung mit einer Vielzahl von auf parallelen Achsen angeordneten Rollen;
- Fig. 7: eine Darstellung der Kräftekompensation in einem Filtermodul gemäß Fig. 5;
- Fig. 8: ein Ausführungsbeispiel für ein Filtermodul gemäß dem zweiten Ausführungskonzept der Erfindung mit jeweils hohlzylindrisch angeordneten Filterelementen und Verformungseinheit, welche relativ zueinander rotieren;
- Fig. 9: eine Darstellung der möglichen Lagen der Einlässe und Auslässe der Filterelemente in einem Filtermodul gemäß Fig. 5;
- Fig. 10: ein weiteres Ausführungsbeispiel für ein Filtermodul gemäß dem zweiten Ausführungskonzept der Erfindung, wobei die die Filterelemente verbindenden Wandungen verformt werden.

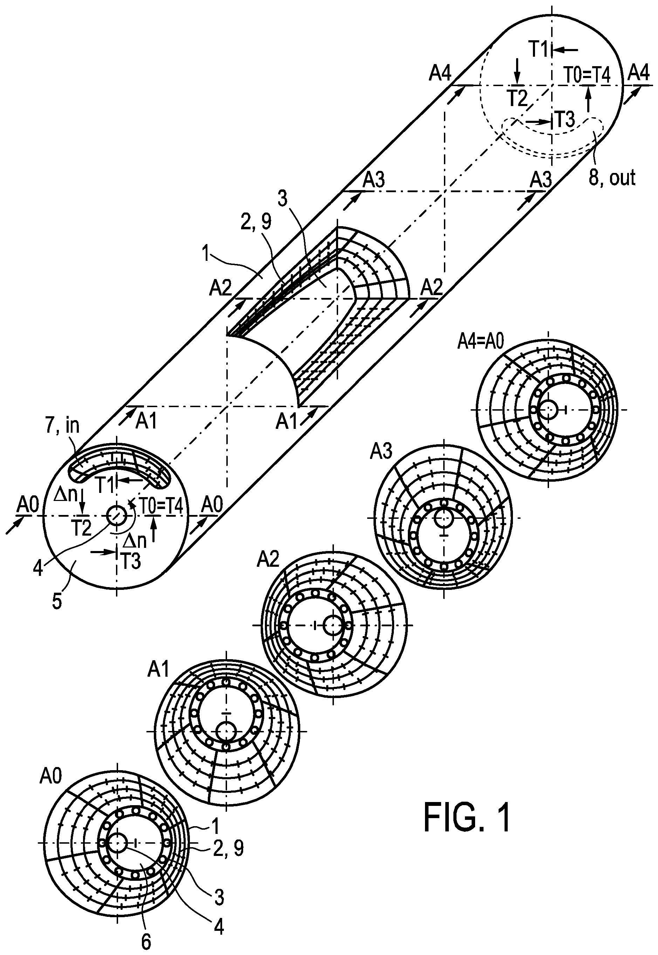

In dem in Fig. 1 gezeigten Ausführungsbeispiel für ein Filtermodul gemäß dem ersten Ausführungskonzept der Erfindung werden die Schritte eines kontinuierlichen Förderprozesses eines Stoffgemischs gezeigt.

In einem hier festen, zylindrischen Gehäuse 1, das in axialer Richtung durchströmt wird, ist ein in mehrere (hier *n* = 6) quer zur Strömungsrichtung gasdicht gegeneinander abgetrennte Kreiszylindersektoren 9 unterteiltes Medium 2 (z. B. ein offenporiger Schwamm) befestigt. Jeder der Kreiszylindersektoren 9 soll nacheinander in der in Fig. 1 von A0 bis A4 gezeigten Weise durch eine Verformungseinheit 4, 6 verformt werden und somit eine eigene Förderwirkung auf das Stoffgemisch ausüben.

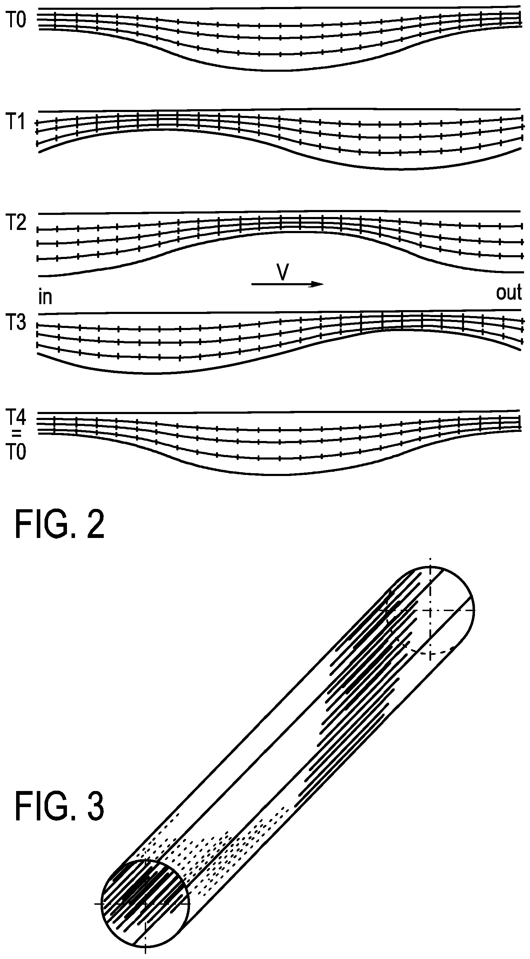

Die Innenseiten der Kreiszylindersektoren 9 liegen auf einer flexiblen Hülle 3 auf, die im Ausführungsbeispiel in der Form einer rotierenden Helix die sinusförmigen geometrischen Verläufe erzwingt, wie in Fig. 2 gezeigt. Der Antrieb der helixförmigen Rotation ist die Verformungseinheit 4, 6, hier eine Welle 4, die mit zwei Deckeln 5 relativ zum Gehäuse mit der Drehzahl *Δn* umläuft. In den Deckeln 5 befinden sich der Einlass 7 "in" bzw. der Auslass 8 "out". Diese sichern z. B. ein Ansaugen und Austreiben des Stoffgemischs im richtigen Umlaufzustand.

Auf der Welle 4 ist in axialer Richtung nebeneinander und vorzugsweise lückenlos eine Vielzahl von vorzugsweise kreisscheibenförmigen, zueinander phasenversetzten und sich in radialer Richtung erstreckenden Exzentern 6 angeordnet und mit der Welle 4 drehfest verbunden. Damit hat die aus der Welle 4 und den Exzentern 6 bestehende Verformungseinheit 4, 6 angenähert eine helixförmige Geometrie.

Die Erzeugung der helixförmigen Rotation ist in den Schnitten A0 bis A4 dargestellt. Korrespondierend zu den angezeigten Orten in der perspektivischen Zylinderdarstellung ist hier jeweils der an dem jeweiligen Ort auf der Welle 4 angebrachte Exzenter 6 der Verformungseinheit 4, 6 gezeigt. Je genauer die Helix durch die Vielzahl von Exzentern 6 angenähert wird, desto kontinuierlicher ist die Förderwirkung des Stoffgemischs und die Bindung von Partikeln im Medium 2. Die Exzenter 6 laufen reibungsarm in der flexiblen Hülle 3. Zu diesem Zweck ist vorzugsweise zwischen jedem Exzenter 6 und der Hülle 3 ein Lager, insbesondere ein Wälzlager, angeordnet.

Betrachtet man in den in Fig. 1 angetragenen Schnitten A0 bis A4 nur denjenigen Kreiszylindersektor 9, der sich im Schnitt A0 ganz rechts befindet, und ergänzt gedanklich alle Zustände des Mediums 2 zwischen den dargestellten Schnitten A0 bis A4, so ergeben sich aus tangentialer Sicht von oben die Bilder T0 bis T4 aus Fig. 2.

Das Medium 2 besitzt bevorzugt eine geringe Materialdämpfung und eine hohe Wechselfestigkeit. Ein optional wirkungsverstärkendes Fluid des Stoffgemischs sollte dabei eine Oberflächenspannung aufweisen, die das Expandieren des Mediums 2 nicht unnötig hemmt.

In Fig. 2 ist ein Beispiel für den Verlauf der einzelnen zeitlichen geometrischen Phasen T0 bis T4 eines Teilabschnitts des Filtermediums im Schnitt gezeigt, wobei mit T4 nach 360° wieder die Position T0 erreicht wird.

Der Transportvorgang ähnelt dabei dem Lungengang von Feinststäuben. Der wesentliche Unterschied besteht darin, dass in dem erfindungsgemäßen Filtermodul zwar ein partikelbehaftetes Stoffgemisch, insbesondere ein Aerosol, wie bei der Lunge durch ein Medium 2 geleitet wird, allerdings nicht intermittierend bidirektional, wie in einer Balgpumpe, sondern kontinuierlich unidirektional. Dies wird ermöglicht, indem das Medium periodisch, vorzugsweise in Sinuswellen, zusammengedrückt wird, wobei die Bewegung in eine Förderrichtung wandert (vgl. Fig. 2).

In Fig. 1 ist zum Zeitpunkt T0 der Einlass 7 "in" verschlossen. Über den Zeitpunkt T1 öffnet sich der Einlass 7 durch Drehung des Deckels 5 bis zum Maximum in T2. Ab dann schließt dieser wieder über T3 bis T4, was der Ausgangsstellung T0 entspricht. Während des Fördervorgangs wandert der Sinusberg in Förderrichtung, wobei der Weg für das Stoffgemisch in den jeweiligen Kreiszylindersektoren 9 an beiden Tiefpunkten durch das zusammengedrückte Medium 2 verschlossen ist. In den Zwischenphasen wird ein Rückfluss aus den noch nicht vollständig verschlossenen Medien 2 der jeweiligen Kreiszylindersektoren 9 durch den Deckel 5 verhindert. Das eingeschlossene Stoffgemisch wird also durch den sich verjüngenden Querschnitt - wie in den Alveolen beim Ausatmen - angetrieben. Alle hier nicht anhaftenden Partikel müssen das gesamte Medium 2 auf dem Weg zum Auslass 8 durchlaufen.

Der Auslass 8 "out" ist in T0 ebenfalls verschlossen. Über den Zeitpunkt T1 öffnet sich dieser bis zum Maximum in T2, wobei das gefilterte Stoffgemisch entlassen wird. Ab dann schließt dieser unter weiterer Austreibung wieder über T3 bis T4, was auch hier der Ausgangsstellung T0 entspricht.

In Fig. 3 ist ein schematisches, perspektivisches Verlaufsbild des Pump- bzw. Transportvorgangs eines Stoffgemischs für die Kreiszylindersektoren dargestellt.

In dem in Fig. 1 bis 3 dargestellten Filtermodul gemäß dem ersten Ausführungskonzept der Erfindung erfolgt eine vollständige Kräftekompensation, so dass die konstante Pumpwirkung allein durch ein Antriebsmoment erzeugt wird, welches durch eine einzige helixförmige Verformungseinheit geschieht. Dieses geschieht durch mehrere der in Fig. 1 gezeigten Filterelemente (Kreiszylindersektoren), die lediglich am Einlass und am Auslass durchlässig und so angeordnet sind, dass ihre äußeren Umfangsflächen einen Hohlzylindermantel bilden. Die Wandungen der Filterelemente sind dicht, um Querströmungen zu vermeiden.

Nachteilig dabei ist, dass die einzelnen Filterelemente nicht nur in einer einzigen Richtung quer zum Förderstrom verformt werden, sondern in zweien.

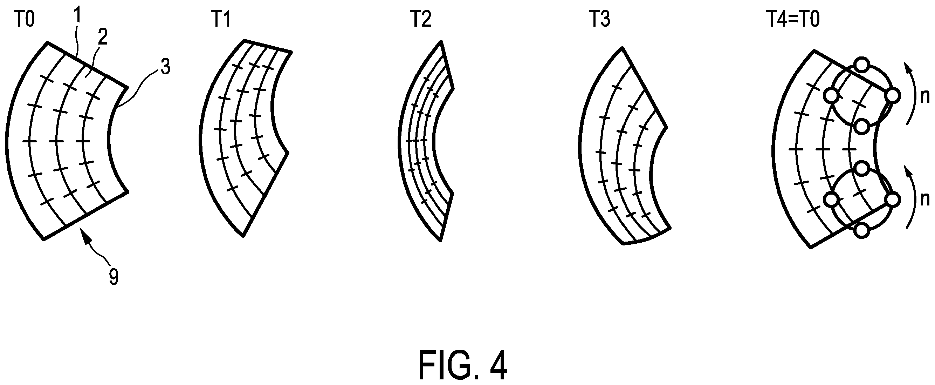

Fig. 4 zeigt Bewegungsbilder T0 bis T4 für einen einzelnen Zylindersektor in dem Filtermodul aus dem gemäß dem ersten Ausführungskonzept der Erfindung gemäß Fig. 1. Man erkennt, dass zwei Punkte des "baumkuchenstückförmigen" Querschnitts eine Kreisbahn beschreiben, wodurch unnötig viel Walkarbeit verrichtet wird und somit eine geringere Betriebsdauer sowie ein höherer Energieverbrauch zu erwarten sind.

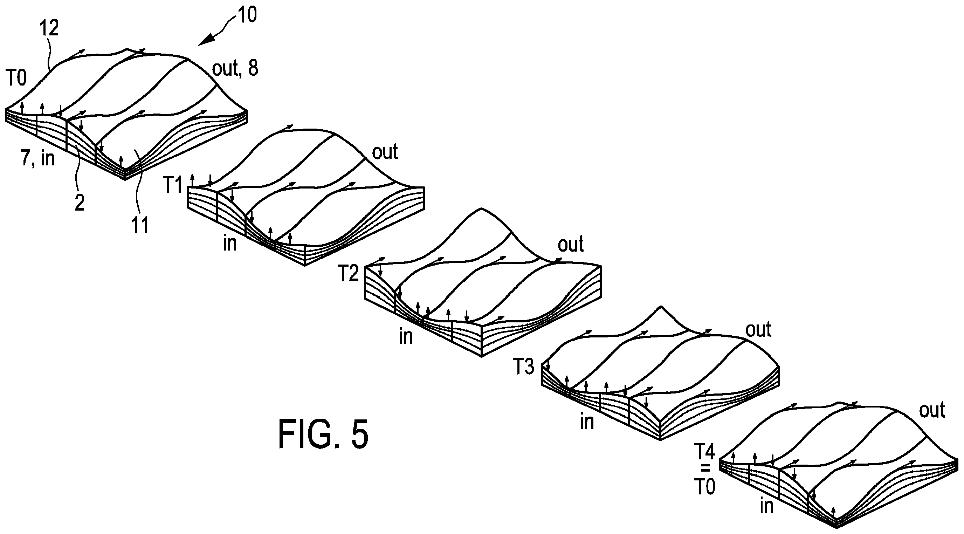

Fig. 5 zeigt eine perspektivische Ansicht eines Filtermoduls 10 gemäß dem zweiten Ausführungskonzept der Erfindung in fünf verschiedenen Verformungszuständen im Verlauf der periodischen, wellenförmigen Verformungsbewegung. Dabei wird eine konstante Pumpwirkung erzielt, indem mehrere Filterelemente 11 nebeneinander angeordnet und jeweils konstant zueinander phasenversetzt verformt werden. Es ist zu erkennen, dass sich nicht nur in Förderrichtung Sinusformen ergeben, sondern auch quer dazu. Im Gesamtbild wandern sinusförmige Wellenfronten diagonal zur Förderrichtung. Der Einsatz mehrerer nebeneinander liegender Filterelemente 11 ist erforderlich, damit sich keine Strömungen quer zur Förderrichtung einstellen. Eine besonders gleichmäßige Pumpwirkung ist bei rein sinusförmigen Wellen zu erwarten.

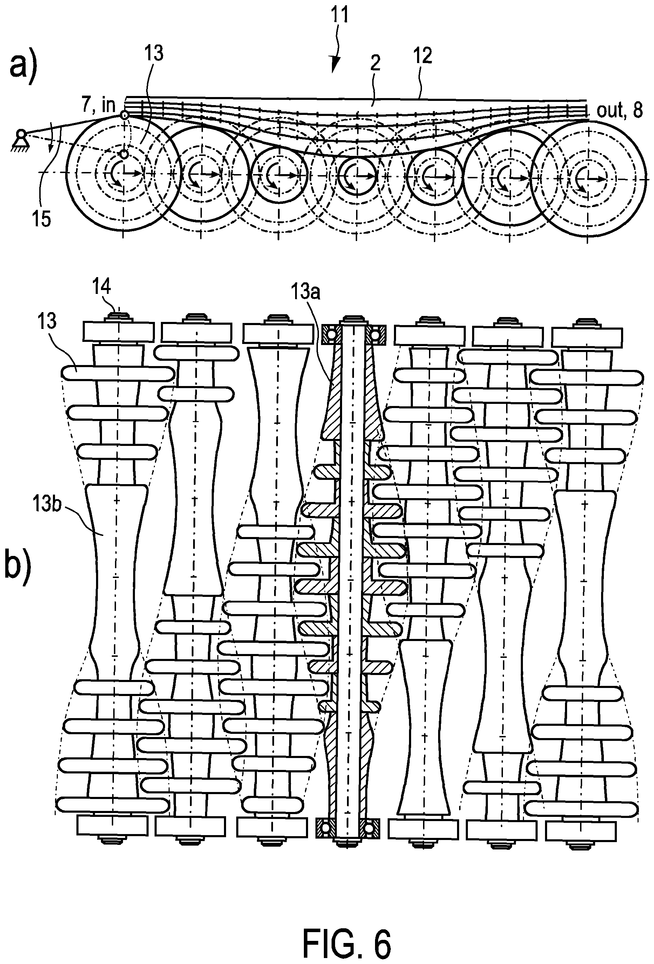

Fig. 6 zeigt (Fig. 6a in einem vertikalen Querschnitt durch das Filtermodul 10 und Fig. 6b in einer Aufsicht auf bzw. in einem Schnitt durch die Verformungseinheit), wie die Sinusfronten z. B. mechanisch erzeugt werden können: Für eine größtmögliche Annäherung an die gewünschte Verformung rollen auf Achsen 14, die in geringem Achsabstand zueinander angeordnet sind, angeordnete Rollen 13 in Förderrichtung auf den Filterelementen 11 ab. Die Rollen 13 weisen verschiedene Durchmesser auf, so dass sie auf den Kontaktflächen zu den Filterelementen 11 die Sinusfronten bilden und reibungsarm mit individueller Drehzahl laufen. Durch eine rippenförmige Unterbrechung der Kontur können sich die Achsen 14 mit den Rollen 13 gegenseitig durchdringen und somit im geringstmöglichen Achsabstand angeordnet werden.

Es ist auch möglich, dass sich der Durchmesser einer Rolle 13 entlang der axialen Ausdehnung der Rolle 13 ändert und die Rolle 13 entsprechend länger ist. Dies ist insbesondere im Bereich kleiner Durchmesser sinnvoll, in denen eine gegenseitige Durchdringung der Rollen 13 benachbarter Achsen 14 nicht notwendig ist. Eine solche Rolle 13 kann insbesondere eine zumindest teilweise im Wesentlichen konische (Rolle 13a) oder doppelt-konische (Rolle 13b) Form annehmen.

Die Filterelemente 11 sollten zwecks pulsationsfreier Förderung die Länge einer Sinuswelle haben.

Da die Rollen 13 das Filterelement 11 in Förderrichtung trapezförmig scheren würden, ist an der Einlassseite "in" eine Schwinge 15 angebracht, welche die Wand des Filterelementes 11 in Position hält.

Auch z. B. über die Fläche verteilte vertikal wirkende Aktuatoren beliebigen Antriebsprinzips könnten diese Verformungen erzeugen. In diesem Fall wäre keine Schwinge 15 erforderlich.

Die in Fig. 6 gezeigten Achsen 14 mit den Rollen 13 werden mit jeweils sinusförmigen Streckenlasten beaufschlagt und sind im asymmetrischen Fall mit Kippmomenten belastet. Ferner stellt sich immer eine Last quer zur Förderrichtung ein, da die Rollen 13 schräg zu den Wellenfronten laufen.

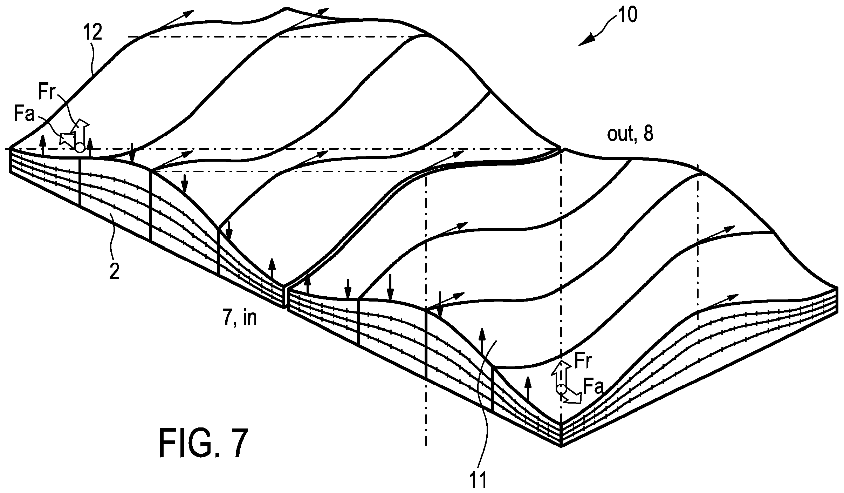

Fig. 7 zeigt, wie sich diese beiden ungewünschten Lasten durch symmetrische Anordnung mehrerer Filterelemente 11 in einem Filtermodul 10 jeweils gegenseitig kompensieren: Die an den vorderen Ecken dargestellten Kraftpfeile für die Radiallasten Fᵣ haben den gleichen Hebelarm zur Mitte, wodurch sich die Kippmomente aufheben, und die Rollen-Axiallasten Fₐ haben entgegengesetzte Orientierungen. Die Wellenfronten sind durch Strich-Punkt-Linien verdeutlicht und ähneln einer Pfeilverzahnung, die in Förderrichtung weist.

Angesichts der Orientierung der Wellenfronten ist die folgende elastische Gestaltung der dichten Wandungen 12 der Filterelemente 11, entsprechend einem Bambusrollo, sinnvoll:
- Parallel zu den Strich-Punkt-Linien sollte zwecks möglichst genauer Approximation an die geraden Fronten auch zwischen benachbarten Rollen 13 eine hohe Biegesteifigkeit vorliegen, erzeugt z. B. durch stabförmige Einlagen.
- Quer dazu sollte zwecks möglichst genauer Approximation der Sinusform eine hohe Biegeelastizität vorliegen.
- Die durch die gegenüber den Filterelementen 11 größere Bahnlänge der Sinuswellen erzeugte Reckung der Wandung 12 kann durch Vorspannung oder Faltung im unverformten Zustand kompensiert werden.
- Zur Vermeidung von Querschub in den Filterelementen 11 werden deren Wandungen 12 an die Umgebung gekoppelt, vgl. die in Fig. 6 am Einlass "in" befestigte Schwinge 15.

Die in Fig. 7 eingetragenen Kraftpfeile für die Radiallasten Fᵣ haben dieselbe Orientierung und addieren sich somit.

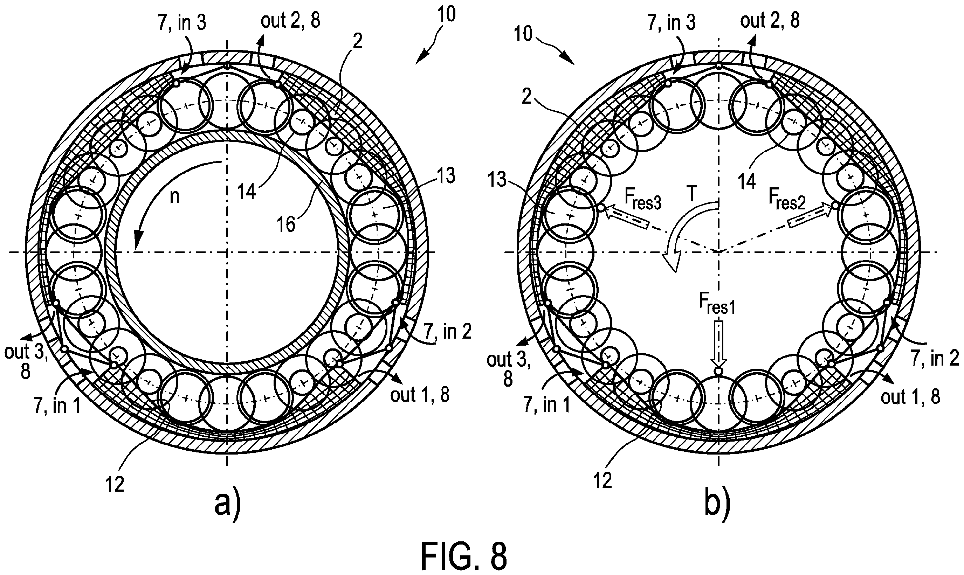

In Fig. 8 ist daher eine Ausführung eines Filtermoduls 10 gemäß dem zweiten Ausführungskonzept der Erfindung gezeigt, in der eine solche Kompensation erfolgt durch die gleichmäßige Anordnung von mindestens zwei der in Fig. 7 dargestellten Anordnungen von Filterelementen 11 auf einem Hohlzylinder. Dabei sollte zwecks pulsationsfreier Förderung in die bzw. aus den Einlässen und Auslässen in1 bis out3 mindestens ein Satz von Achsen 14 einer Sinuswellenlänge mehr als Filterelemente 11 verbaut sein.

Hier geschieht die Förderung allerdings in tangentialer Richtung, wie an den drei markierten Stellen in1 bis out3 zu sehen ist, und nicht in axialer Richtung, wie in dem Filtermodul gemäß dem ersten Ausführungskonzept der Erfindung. Zur Vergleichmäßigung des Überrollvorgangs werden die Wandungen 12 der Anordnungen von Filterelementen 11 an den Ein- und Auslässen in1 bis out3 gekoppelt.

In Fig. 8a sind drei Anordnungen von Filterelementen 11 und vier Sätze von Achsen 14 so angeordnet, dass alle verformenden Rollen 13 von einer zentralen Walze 16 angedrückt werden. Der Antrieb mit der Drehzahl n kann reibschlüssig direkt über die zentrale Walze 16 oder formschlüssig über die Achsen 14 der verformenden Rollen 13 erfolgen.

In Fig. 8b ist die zentrale Walze 16 durch die von dieser aus auf die Anordnungen von Filterelementen 11 wirkenden konstanten und gleichen resultierenden Kräfte Fᵣₑₛ₁ bis Fᵣₑₛ₃ und das zum Erzeugen der Drehzahl n erforderliche Antriebsmoment T ersetzt. Hier ist zu erkennen, dass sich die Wirklinien der Kräfte in einem Punkt treffen und somit kompensieren.

Durch diese Anordnung werden die in Fig. 4 gezeigten zirkularen Bewegungen vermieden: Das Filtermedium 2 wird insbesondere radial verformt und bekommt eine geringste Verformungskomponente in Förderrichtung, die mit der Länge der Schwinge 15 minimiert wird. Die Anordnungen von Filterelementen 11 können beliebig hydraulisch in Reihe oder parallel geschaltet werden und auch verschiedene Filtermedien enthalten, z. B. für das Kaskadieren von groben über mittlere zu feinen Filtermedien.

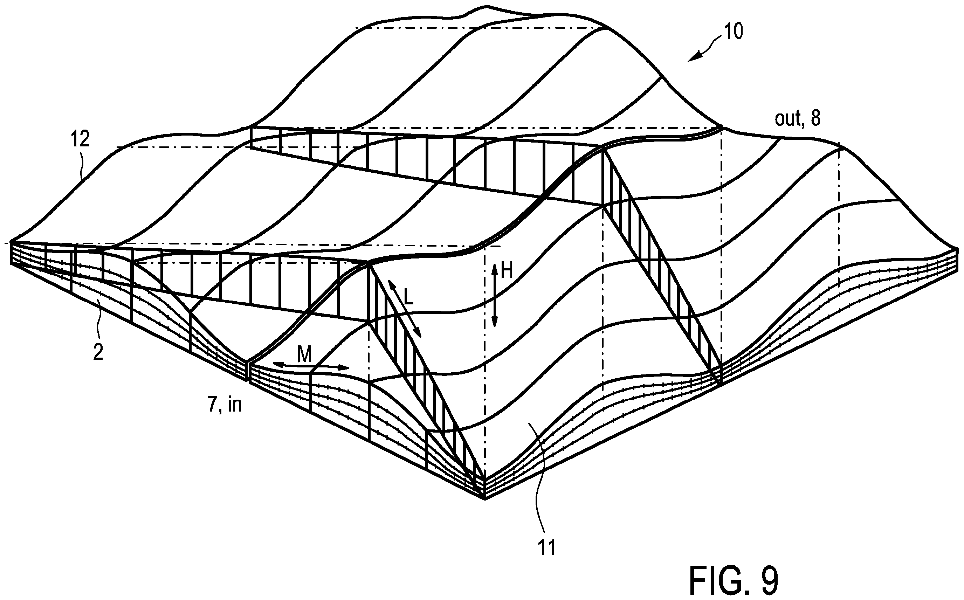

Für einen ruhigen Lauf der Anordnung aus Fig. 8 ist zu berücksichtigen, dass die Ein- und Auslassflächen der Anordnungen von Filterelementen 11 nicht orthogonal zur Strömungsrichtung liegen sollten, da beim Auftreffen der Rollen 13 mechanische Stöße entstehen (siehe die mit M gekennzeichnete Schnittfläche in Fig. 9). Die ebenda mit H gekennzeichnete schräge Linie ist als Lage der Ein- und Auslassflächen ebenfalls ungeeignet, da in diesem Fall maximale hydraulische Pulsationen auftreten. Einen exemplarischen Kompromiss zeigt die mit L gekennzeichnete Schnittfläche, durch deren Wahl nur leichte mechanische und hydraulische Ungleichmäßigkeiten zu erwarten sind.

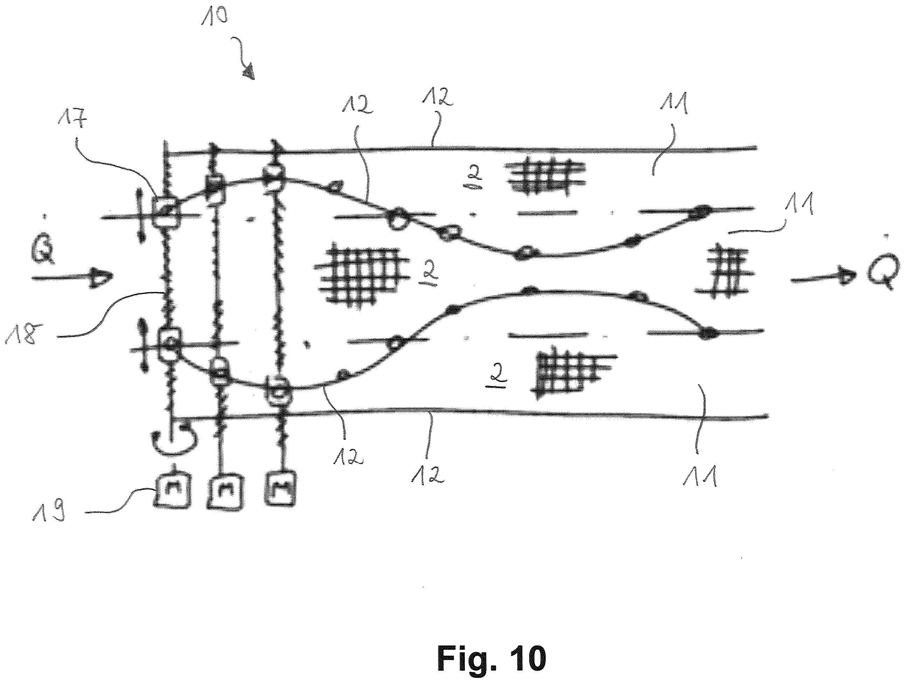

Fig. 10 zeigt eine weitere Ausführung eines Filtermoduls 10 gemäß dem zweiten Ausführungskonzept der Erfindung, wobei die Verformungseinheit in dieser Ausführung die die Filterelemente verbindenden Wandungen verformt.

In Fig. 10 sind drei nebeneinander angeordnete und miteinander verbundene Filterelemente 11 dargestellt. Die mit *Q̇* bezeichneten Pfeile geben die Durchflussrichtung des zu filternden Stoffgemischs durch die Filterelemente 10 an, wobei sich in der Figur links die Einlassseite und rechts die Auslassseite befindet.

Die Verformungseinheit weist eine Reihe von Spindeltrieben 18 auf, auf denen als Muttern ausgebildete Kontaktelemente 17 laufen, die an ihren Außenflächen mit den Wandungen 12 der Filterelemente 11 verbunden sind. Die Kontaktelemente 17 sind vorzugsweise an die Wandungen 12 angeklebt oder angeschweißt und/oder formschlüssig mit den Wandungen 12 verbunden, indem ein flacher Vorsprung (nicht dargestellt) an dem jeweiligen Kontaktelement zwischen zwei miteinander verbundene Wandungen 12 benachbarter Filterelemente 11 gesteckt ist.

Jeder Spindeltrieb 18 weist abwechselnd Abschnitte mit Links- und Rechtsgewinden auf, welche mit entsprechenden Links- bzw. Rechtsgewinden der Kontaktelemente 17 in Eingriff stehen, so dass sich benachbarte Kontaktelemente 17 bei einer Drehung des Spindeltriebs 18 in entgegengesetzte Richtungen bewegen.

Die Spindeltriebe 18 sind vorzugsweise im Wesentlichen parallel und äquidistant zueinander im Wesentlichen senkrecht zur Längsausdehnung der Filterelemente 11 und über die gesamte Längsausdehnung der Filterelemente 11 angeordnet. In Fig. 10 sind lediglich drei Spindeltriebe 18 dargestellt, während die Positionen der Kontaktelemente der weiteren, nicht dargestellten Spindeltriebe durch Kreise angedeutet sind.

Jeder Spindeltrieb 18 ist an einem Ende mit der Welle eines Motors 19 verbunden und kann durch diesen in Drehung in beide Richtungen versetzt werden. Durch eine entsprechende Steuerung der Motoren 19 lassen sich die jeweiligen Kontaktelemente 17, die dieselben beiden miteinander verbundenen Wandungen 12 benachbarter Filterelemente 11 kontaktieren, in eine wellenförmige, vorzugsweise sinusförmige Bewegung versetzen. Indem die Kontaktelemente 17 einen entsprechenden Druck oder Zug auf die Wandungen 12 ausüben, werden die gewünschten periodischen Verformungsbewegungen der Filterelemente 11 erzeugt.

In Fig. 10 werden die äußeren Wandungen der außenliegenden Filterelemente 11 nicht verformt. Selbstverständlich lassen sich aber weitere Kontaktelemente 17 auf den Spindeltrieben 18 vorsehen, die mit diesen äußeren Wandungen verbunden sind, um auch diese in periodischer Weise zu verformen.

Aufgrund der jeweils entgegengesetzten Bewegungen der auf den Spindeltrieben 18 benachbarten Kontaktelemente 17 sind die Bewegungen benachbarter Filterelemente 11 in Fig. 10 gegeneinander phasenversetzt. Der Phasenversatz beträgt dabei 180 Grad, d. h. während ein Filterelement 11 komprimiert wird, wird das benachbarte oder die beiden benachbarten Filterelemente 11 expandiert und umgekehrt.

Durch einen (nicht dargestellten) Mechanismus, bei dem benachbarte Kontaktelemente 17 unabhängig voneinander bewegt werden können, lassen sich auch andere Werte als 180 Grad für den Phasenversatz erzielen. Dazu ist vorzugsweise jeder Spindeltrieb 18 mit einem durchgehenden Gewinde derselben Orientierung (Links- oder Rechtsgewinde) versehen, und die Spindeltriebe 18 sind nicht drehbar montiert. Dagegen weist jedes Kontaktelement 17 eine gegenüber dem Gehäuse des Kontaktelements 17 bewegliche Mutter auf, die mit dem Spindeltrieb 18 in Eingriff steht. Außerdem ist jedes Kontaktelement 17 mit einem eigenen Antrieb versehen, um die Mutter in Drehung zu versetzen, wodurch sich das Kontaktelement 17 auf dem Spindeltrieb 18 bewegt. Durch eine entsprechende Steuerung, die vorzugsweise drahtlos erfolgt, können sich dann alle Kontaktelemente 17 unabhängig voneinander auf den Spindeltrieben 18 bewegen, wodurch sich beliebig phasenversetzte Verformungsbewegungen realisieren lassen.

Bei der Ausführung der Erfindung gemäß Fig. 10 wirken die Verformungsbewegungen in derjenigen Richtung auf die Filterelemente 11, in der die Filterelemente 11 nebeneinander angeordnet sind. Die Filterelemente 11 benötigen bei ihrer Verformung daher keinen Ausweichraum senkrecht zu dieser Richtung. Daraus ergibt sich der Vorteil, dass der zur Verfügung stehende Bauraum annähernd lückenlos ausgefüllt wird.

Weiterhin lassen sich auch mehrere Schichten von nebeneinander angeordneten und miteinander verbundenen Filterelementen 11 übereinander "stapeln", wobei lediglich die Spindeltriebe 18 zwischen den Schichten hindurchgeführt werden müssen. Auch hier wird der zur Verfügung stehende Bauraum annähernd lückenlos ausgefüllt.

### Bezugszeichenliste

- 1: Gehäuse
- 2: Medium
- 3: Hülle
- 4: Welle
- 5: Deckel
- 6: Exzenter
- 7: Einlass
- 8: Auslass
- 9: Kreiszylindersektor

- T0 - T4: Zeitpunkte (T4 = T0)
- A0 - A4: Axiale Positionen (A4 = A0)
- *Δn*: Drehzahl

- 10: Filtermodul
- 11: Filterelement
- 12: Wandung
- 13: Rolle
- 13a: konische Rolle
- 13b: doppelt-konische Rolle
- 14: Achse
- 15: Schwinge
- 16: zentrale Walze
- 17: Kontaktelement
- 18: Spindeltrieb
- 19: Motor

## Patentansprüche

1. Filtermodul zur Bindung von Partikeln eines Stoffgemischs in zumindest einem Medium (2) mit einem zylindrischen Gehäuse (1), in welchem eingebracht sind:
ein zylindrisches, bevorzugt hohlzylindrisches, offenporiges Medium (2), welches dazu ausgebildet ist, ein Stoffgemisch zu halten, insbesondere ein Schwammmedium, ein offenporiger Schaum und/oder ein Filtermedium für ein Stoffgemisch,
zumindest eine Verformungseinheit (4, 6), wobei das offenporige Medium (2) durch die Verformungseinheit (4, 6), bevorzugt zumindest entlang der Zylinderachse des Gehäuses und/oder in radialer Richtung, geometrisch verformbar ist, sowie
zumindest ein Einlass (7) und ein Auslass (8) für ein Stoffgemisch,
**dadurch gekennzeichnet, dass**
in dem zylindrischen Gehäuse (1) genau ein Auslass (8) für das Stoffgemisch eingebracht ist.

2. Filtermodul nach Anspruch 1, **dadurch gekennzeichnet, dass** die zumindest eine Verformungseinheit (4, 6) relativ zu dem Gehäuse (1) und dem Medium (2) bewegbar ist.

3. Filtermodul nach Anspruch 2, **dadurch gekennzeichnet, dass** bei der Relativbewegung die zumindest eine Verformungseinheit (4, 6) in Ruhe ist und sich das Gehäuse (1) und das Medium (2) bewegen oder dass das Gehäuse (1) und das Medium (2) in Ruhe sind und sich die zumindest eine Verformungseinheit (4, 6) bewegt.

4. Filtermodul nach einem der vorangegangenen Ansprüche, **dadurch gekennzeichnet, dass** das zylindrische, offenporige Medium (2) zumindest zwei, bevorzugt zumindest vier, weiter bevorzugt zumindest sechs Zylindersektoren (9) bildet.

5. Filtermodul nach Anspruch 4, **dadurch gekennzeichnet, dass** jeweils benachbarte Zylindersektoren (9), vorzugsweise durch eine Hülle (3), bezüglich des Stoffgemischs gegeneinander abgedichtet sind.

6. Filtermodul nach einem der vorangegangenen Ansprüche, **dadurch gekennzeichnet, dass** der zumindest eine Einlass (7) und/oder der Auslass (8) jeweils in einem Deckel (5) des Gehäuses (1) eingebracht ist, wobei der Deckel (5) jeweils bevorzugt mit der Verformungseinheit (4, 6) koppelbar ist.

7. Filtermodul nach einem der vorangegangenen Ansprüche, **dadurch gekennzeichnet, dass** die Verformungseinheit (4, 6) eine helixartige Geometrie aufweist, die dazu ausgebildet ist, auf das Medium (2) verformend einzuwirken, und dadurch das Stoffgemisch durch das Medium (2), in das Medium (2) hinein und/oder aus dem Medium (2) heraus bewegt.

8. Filtermodul nach Anspruch 7, **dadurch gekennzeichnet, dass** die Verformungseinheit (4, 6) eine Welle, eine Schraube oder ein Schlauchkörper ist und/oder wenigstens einen Exzenter (6) aufweist.

9. Filtermodul nach einem der vorangegangenen Ansprüche, **dadurch gekennzeichnet, dass** das Medium (2) elastisch und/oder kompressibel ist.

10. Filtermodul nach einem der vorangegangenen Ansprüche, **dadurch gekennzeichnet, dass** das Medium (2) ein Substrat oder ein Gel ist.

11. Verfahren zur Bindung von Partikeln eines Stoffgemischs in zumindest einem Medium (2) durch ein Filtermodul nach einem der vorangegangenen Ansprüche, **dadurch gekennzeichnet, dass** zumindest folgende Schritte erfolgen:
a. Bereitstellen des Stoffgemischs an einem der Einlässe (7) des Gehäuses (1);
b. Ansaugen des Stoffgemischs, indem die zumindest eine Verformungseinheit (4, 6) relativ zu dem Gehäuse (1) und dem Medium (2) bewegt wird;
c. Binden der Partikel im Medium (2);
d. Auspumpen des zumindest teilweise von Partikeln befreiten Stoffgemischs am Auslass (8);
e. Beenden oder Fortsetzen mit f.;
f. Austauschen des Mediums (2) gegen ein anderes Medium (2);
g. Fortsetzen mit a.

12. Filtermodul-System aus mindestens zwei Filtermodulen nach einem der Ansprüche 1 bis 10, **dadurch gekennzeichnet, dass** die Filtermodule derart hintereinander geschaltet sind, dass der Auslass (8) eines Filtermoduls mit einem Einlass (7) des folgenden Filtermoduls lösbar, kraft- und stoffgemischübertragend verbunden ist.

13. Verfahren zur Bindung von Partikeln eines Stoffgemischs in zumindest einem Medium (2) durch ein Filtermodul-System nach Anspruch 12, **dadurch gekennzeichnet, dass** zumindest folgende Schritte erfolgen:
a. Bereitstellen des Stoffgemischs an einem Einlass (7) des ersten Filtermoduls;
b. Auspumpen des Stoffgemischs aus jedem Filtermodul am jeweiligen Auslass (8) und Ansaugen des Stoffgemischs in das jeweils folgende Filtermodul an einem jeweiligen Einlass (7), indem die Verformungseinheit (4, 6) und/oder die Deckel (5) eines jeden Filtermoduls relativ zu dem Gehäuse (1) und dem Medium (2) des jeweiligen Filtermoduls gemeinsam bewegt werden;
c. Binden der Partikel in jedem Filtermodul in dem jeweiligen Medium (2);
d. Auspumpen des zumindest teilweise von Partikeln befreiten Stoffgemischs am Auslass (8) des letzten Filtermoduls;
e. Beenden oder Fortsetzen mit f.;
f. Austauschen des Mediums (2) in wenigstens einem Filtermodul gegen ein anderes Medium (2);
g. Fortsetzen mit a.

14. Filtermodul (10) zur Bindung von Partikeln aus einem partikelbehafteten Stoffgemisch, insbesondere aus einem Aerosol oder aus einem partikelbehafteten Fluid, aufweisend:
- eine Mehrzahl von Filterelementen (11), wobei jedes Filterelement (11) mit einem zylindrischen, bevorzugt hohlzylindrischen, offenporigen, Medium (2), welches dazu ausgebildet ist, ein Stoffgemisch zu halten, nsbesondere einem Schwammmedium, einem offenporigen Schaum, einem Gel, einem Molekülgitter und/oder einem Filtermedium für das Stoffgemisch, gefüllt und durch eine für das Stoffgemisch und für das Medium (2) dichte Wandung (12) umschlossen ist und zumindest einen Einlass (7) und genau einen Auslass (8) für das Stoffgemisch aufweist, wobei jedes Filterelement (11) in Richtung seiner Längsausdehnung von dem zumindest einen Einlass (7) zu dem Auslass (8) von dem Stoffgemisch durchströmbar ist, und
- eine Verformungseinheit (13, 14), wobei die Filterelemente (11) und insbesondere das Medium darin durch die Verformungseinheit (13, 14) verformbar sind,
wobei die Filterelemente (11) bezüglich ihrer Längsausdehnung nebeneinander angeordnet sind und jeweils benachbarte Filterelemente (11) entlang ihrer jeweiligen parallel zu ihrer Längsausdehnung verlaufenden und einander zugewandten Teile ihrer Wandungen (12) miteinander verbunden sind,
wobei die Verformungseinheit (13, 14) dazu ausgebildet ist, die Filterelemente (11) bezüglich deren Längsausdehnung periodisch, bevorzugt wellenförmig und besonders bevorzugt sinusförmig, zu verformen und wobei die Verformungsbewegungen der Filterelemente (11) gegeneinander phasenversetzt sind.

15. Filtermodul (10) gemäß Anspruch 14, **dadurch gekennzeichnet, dass** die Verformungsbewegungen der Filterelemente (11) derart gegeneinander phasenversetzt sind, dass sich auf den nebeneinander angeordneten Filterelementen (11) entlang einer Reihe von Stellen auf gleicher Höhe bezüglich der Längsausdehnung der Filterelemente (11) eine periodische, bevorzugt wellenförmige, Verformungsbewegung ergibt.

16. Filtermodul (10) gemäß mindestens einem der Ansprüche 14 bis 15, **dadurch gekennzeichnet, dass** wenigstens ein Einlass (7) und/oder der Auslass (8) wenigstens eines Filterelements (11) auf der Oberfläche des Filterelements (11) eine langgestreckte Form mit einer Längs- und/oder Querausdehnung in einer Richtung (L) aufweist, die zwischen der zur Längsausdehnung des Filterelements (11) quer verlaufenden Richtung (M) und der Ausbreitungsrichtung (H) der Wellenfronten liegt, vorzugsweise auf einer Winkelhalbierenden eines Winkels zwischen den beiden genannten Richtungen (M, H).

17. Filtermodul (10) gemäß mindestens einem der Ansprüche 14 bis 16, **dadurch gekennzeichnet, dass** das Filtermodul (10) weiterhin wenigstens eine Befestigungseinrichtung, insbesondere wenigstens eine Schwinge (15), aufweist, durch die Teile der Wandungen (12) der Filterelemente (11), insbesondere im Bereich der Einlässe (7) der Filterelemente (11), gegenüber wenigstens einem ortsfesten Punkt außerhalb des Filtermoduls (10), insbesondere eingeschränkt beweglich, befestigbar sind.

18. Filtermodul (10) gemäß mindestens einem der Ansprüche 14 bis 17, **dadurch gekennzeichnet, dass** die Verformungseinheit (13, 14) eine Vielzahl von Rollen (13) mit wenigstens teilweise verschiedenen Durchmessern aufweist, die dazu eingerichtet sind, entlang der Längsausdehnung der Filterelemente (11) auf den Filterelementen (11) abzurollen und die Filterelemente (11) dabei wenigstens teilweise unterschiedlich stark zu verformen.

19. Filtermodul (10) gemäß Anspruch 18, **dadurch gekennzeichnet, dass** die Vielzahl von Rollen (13) auf einer Mehrzahl von, insbesondere parallelen, Achsen (14) angeordnet ist.

20. Filtermodul (10) gemäß Anspruch 19, **dadurch gekennzeichnet, dass** wenigstens eine erste Achse (14) und eine zweite, zu der ersten Achse (14) benachbarte Achse (14) parallel zueinander angeordnet sind und dass für ein Paar aus einer ersten auf der ersten Achse (14) angeordneten Rolle (13) und einer zweiten, zu der ersten Rolle (13) unmittelbar benachbarten und auf der zweiten Achse (14) angeordneten Rolle (13) der Abstand der beiden Achsen (14) kleiner ist als die Summe aus dem Radius der ersten Rolle (13) und dem Radius der zweiten Rolle (13).

21. Filtermodul (10) gemäß mindestens einem der Ansprüche 14 bis 20, **dadurch gekennzeichnet, dass** die Mehrzahl von Filterelementen (11) insgesamt hohlzylinderförmig angeordnet sind.

22. Filtermodul (10) gemäß Anspruch 21, **dadurch gekennzeichnet, dass** die Verformungseinheit (13, 14) eine Hohlzylinderform aufweist, dass die Verformungseinheit (13, 14) die Mehrzahl von Filterelementen (11) auf deren Innenseite oder Außenseite berührt und dass die Filterelemente (11) und die Verformungseinheit (13, 14) dazu ausgebildet sind, relativ zueinander zu rotieren.

23. Filtermodul (10) gemäß Anspruch 22, **dadurch gekennzeichnet, dass** das Filtermodul (10) wenigstens zwei bezüglich ihrer Längsausdehnung hintereinander angeordnete Filterelemente (11) aufweist, insbesondere dass in axialer Richtung der Hohlzylinderform, in der die Filterelemente (11) angeordnet sind, eine erste Anzahl von Filterelementen (11) bezüglich ihrer Längsausdehnung nebeneinander und in Umfangsrichtung der Hohlzylinderform eine zweite Anzahl von Filterelementen (11), welche mindestens zwei beträgt, bezüglich ihrer Längsausdehnung hintereinander angeordnet sind, und dass die wenigstens zwei Filterelemente (11) entlang ihrer jeweiligen quer zu ihrer Längsausdehnung verlaufenden und einander zugewandten Teile ihrer Wandungen (12) miteinander verbunden sind.

24. Filtermodul (10) gemäß Anspruch 23, **dadurch gekennzeichnet, dass** die Anzahl der Perioden der periodischen, bevorzugt wellenförmigen, Verformung der Filterelemente (11) bezüglich deren Längsausdehnung durch die Verformungseinheit (13, 14) während einer Umdrehung der Verformungseinheit (13, 14) relativ zu den Filterelementen (11) größer, insbesondere um mindestens eins größer, ist als die Anzahl der hohlzylinderförmig bezüglich ihrer Längsausdehnung hintereinander angeordneten Filterelemente (11).

25. Filtermodul (10) gemäß den Ansprüchen 18, 19 und 22, **dadurch gekennzeichnet, dass** die Verformungseinheit (13, 14) die Mehrzahl von Filterelementen (11) auf deren Innenseite berührt und dass auf der Innenseite der Verformungseinheit (13, 14) eine zentrale Walze (16) angeordnet ist, welche dazu ausgebildet ist, auf jeder Achse (14) jeweils wenigstens eine Rolle (13) reibschlüssig nach außen an die Filterelemente (11) zu drücken.

26. Filtermodul (10) gemäß mindestens einem der Ansprüche 14 bis 25, **dadurch gekennzeichnet, dass** die Verformungseinheit zur Verformung wenigstens eines parallel zur Längsausdehnung der Filterelemente verlaufenden Teiles der Wandungen der Filterelemente, entlang dessen zwei benachbarte Filterelemente miteinander verbunden sind, eingerichtet ist.

27. Verfahren zur Bindung von Partikeln aus einem partikelbehafteten Stoffgemisch, insbesondere aus einem Aerosol oder aus einem partikelbehafteten Fluid, mit einem Filtermodul (10) gemäß mindestens einem der Ansprüche 14 bis 26, wobei das Stoffgemisch an wenigstens einem Einlass (7) wenigstens eines Filterelements (11) des Filtermoduls (10) bereitgestellt wird, das Medium (2) in dem Filterelement (11) durch die Verformungseinheit (13, 14) verformt wird, das Stoffgemisch an dem wenigstens einem Einlass (7) in das Filterelement (11) angesaugt wird, das Filterelement (11) in Richtung seiner Längsausdehnung von dem Einlass (7) zum Auslass (8) von dem Stoffgemisch durchströmt wird, dabei Partikel aus dem Stoffgemisch in dem Medium (2) gebunden werden und das zumindest teilweise von Partikeln befreite Stoffgemisch an dem Auslass (8) ausgepumpt wird.

## Claims

1. Filter module for binding particles of a substance mixture in at least one medium (2) with a cylindrical housing (1), in which are inserted:
a cylindrical, preferably hollow cylindrical, open-pored medium (2) which is designed to hold a substance mixture, in particular a sponge medium, an open-pored foam and/or a filter medium for a substance mixture,
at least one deformation unit (4, 6), the open-pored medium (2) being geometrically deformable by the deformation unit (4, 6), preferably at least along the cylinder axis of the housing and/or in the radial direction, and
at least one inlet (7) and one outlet (8) for a substance mixture, **characterized in that**
exactly one outlet (8) for the substance mixture is introduced into the cylindrical housing (1).

2. Filter module according to claim 1, **characterized in that** the at least one deformation unit (4, 6) is movable relative to the housing (1) and the medium (2).

3. Filter module according to claim 2, **characterized in that** during the relative movement the at least one deformation unit (4, 6) is at rest and the housing (1) and the medium (2) are moving or that the housing (1) and the medium (2) are at rest and the at least one deformation unit (4, 6) is moving.

4. Filter module according to one of the preceding claims, **characterized in that** the cylindrical, open-pored medium (2) forms at least two, preferably at least four, more preferably at least six, cylinder sectors (9).

5. Filter module according to claim 4, **characterized in that** adjacent cylinder sectors (9) are in each case sealed from one another with respect to the substance mixture, preferably by a cover (3).

6. Filter module according to one of the preceding claims, **characterized in that** the at least one inlet (7) and/or the outlet (8) is each incorporated in a lid (5) of the housing (1), wherein the lid (5) is in each case preferably coupleable with the deformation unit (4, 6).

7. Filter module according to one of the preceding claims, **characterized in that** the deformation unit (4, 6) has a helical geometry which is designed to act on the medium (2) in a deforming manner, and thereby moves the substance mixture through the medium (2), into the medium (2), and/or out of the medium (2).

8. Filter module according to claim 7, **characterized in that** the deformation unit (4, 6) is a shaft, a screw or a hose body and/or has at least one eccentric (6).

9. Filter module according to one of the preceding claims, **characterized in that** the medium (2) is elastic and/or compressible.

10. Filter module according to one of the preceding claims, **characterized in that** the medium (2) is a substrate or a gel.

11. Method for binding particles of a substance mixture in at least one medium (2) by means of a filter module according to one of the preceding claims, **characterized in that** at least the following steps take place:
a. Providing the substance mixture at one of the inlets (7) of the housing (1);
b. Sucking in the substance mixture by moving the at least one deformation unit (4, 6) relative to the housing (1) and the medium (2);
c. Binding the particles in the medium (2);
d. Pumping out the substance mixture freed at least partially from particles at the outlet (8);
e. Quitting or continuing with f.;
f. Exchanging the medium (2) for another medium (2);
g. Continuing with a.

12. Filter module system of at least two filter modules according to one of claims 1 to 10, **characterized in that** the filter modules are connected in series in such a way that the outlet (8) of one filter module is connected to an inlet (7) of the following filter module, the connection being detachable and able to transfer forces and substance mixture.

13. Method for binding particles of a substance mixture in at least one medium (2) by means of a filter module system according to claim 12, **characterized in that** at least the following steps take place:
a. Providing the substance mixture at an inlet (7) of the first filter module;
b. Pumping out the substance mixture from each filter module at the respective outlet (8) and sucking the substance mixture into the respective following filter module at a respective inlet (7) by moving the deformation unit (4, 6) and/or the lids (5) of each filter module together relative to the housing (1) and the medium (2) of the respective filter module ;
c. Binding the particles in each filter module in the respective medium (2);
d. Pumping out the substance mixture freed at least partially from particles at the outlet (8) of the last filter module;
e. Quitting or continuing with f.;
f. Exchanging the medium (2) in at least one filter module for another medium (2);
g. Continuing with a.

14. Filter module (10) for binding particles from a particle-laden substance mixture, in particular from an aerosol or from a particle-laden fluid, comprising:
- a plurality of filter elements (11), each filter element (11) being filled with a cylindrical, preferably hollow cylindrical, open-pored medium (2) which is designed to hold a substance mixture, in particular a sponge medium, an open-pored foam, a gel, a molecular lattice and/or a filter medium for the substance mixture, and enclosed by a wall (12) which is tight for the substance mixture and for the medium (2) and having at least one inlet (7) and exactly one outlet (8) for the substance mixture, each filter element (11) allowing passage of the substance mixture in the direction of its longitudinal extent from the at least one inlet (7) to the outlet (8), and
- a deformation unit (13, 14), the filter elements (11) and in particular the medium therein being deformable by the deformation unit (13, 14),
wherein the filter elements (11) are arranged next to one another with regard to their longitudinal extent and adjacent filter elements (11) are connected to one another in each case along the respective parts of their walls (12) running parallel to their longitudinal extent and facing one another,
wherein the deformation unit (13, 14) is designed to periodically deform the filter elements (11) with respect to their longitudinal extent, preferably in a wave-shaped and particularly preferably in a sinusoidal manner, and wherein the deformation movements of the filter elements (11) are phase-shifted from one another.

15. Filter module (10) according to claim 14, **characterized in that** the deformation movements of the filter elements (11) are phase-shifted from one another in such a way that on the filter elements (11) arranged next to one another, along a number of points at the same height with respect to the longitudinal extent of the filter elements (11), a periodic, preferably undulating, deformation movement results.

16. Filter module (10) according to at least one of claims 14 to 15, **characterized in that** at least one inlet (7) and/or the outlet (8) of at least one filter element (11) has, on the surface of the filter element (11), an elongated shape with a longitudinal and/or transverse extent in a direction (L) which lies between the direction (M) transverse to the longitudinal extent of the filter element (11) and the direction of propagation (H) of the wave fronts, preferably on a bisector of an angle between the two directions (M, H) mentioned.

17. Filter module (10) according to at least one of claims 14 to 16, **characterized in that** the filter module (10) furthermore has at least one fastening device, in particular at least one rocker (15), through which parts of the walls (12) of the filter elements (11), in particular in the area of the inlets (7) of the filter elements (11), are attachable, in particular with limited mobility, with respect to at least one stationary point outside the filter module (10).

18. Filter module (10) according to at least one of claims 14 to 17, **characterized in that** the deformation unit (13, 14) has a plurality of rollers (13) with at least partially different diameters, which are designed to roll on the filter elements (11) along the longitudinal extent of the filter elements (11) and to deform the filter elements (11) at least partially to different degrees.

19. Filter module (10) according to claim 18, **characterized in that** the plurality of rollers (13) is arranged on a plurality of, in particular parallel, axes (14).

20. Filter module (10) according to claim 19, **characterized in that** at least a first axis (14) and a second axis (14) adjacent to the first axis (14) are arranged parallel to one another and that for a pair of a first roller (13) arranged on the first axis (14) and a second roller (13) being immediately adjacent to the first roller (13) and arranged on the second axis (14), the distance between the two axes (14) is smaller than the sum of the radius of the first roller (13) and the radius of the second roller (13).

21. Filter module (10) according to at least one of claims 14 to 20, **characterized in that** the plurality of filter elements (11) are arranged altogether in the shape of a hollow cylinder.

22. Filter module (10) according to claim 21, **characterized in that** the deformation unit (13, 14) has a hollow cylindrical shape, that the deformation unit (13, 14) touches the plurality of filter elements (11) on their inside or outside and that the filter elements (11) and the deformation unit (13, 14) are designed to rotate relative to one another.

23. Filter module (10) according to claim 22, **characterized in that** the filter module (10) has at least two filter elements (11) arranged one behind the other with respect to their longitudinal extent, in particular that, in the axial direction of the hollow cylindrical shape in which the filter elements (11) are arranged, a first number of filter elements (11) are arranged next to one another with regard to their longitudinal extent and, in the circumferential direction of the hollow cylindrical shape, a second number of filter elements (11), which is at least two, are arranged one behind the other with regard to their longitudinal extent, and that the at least two filter elements (11) are connected to one another along the parts of their walls (12) running transversely to their longitudinal extension and facing one another.

24. Filter module (10) according to claim 23, **characterized in that** the number of periods of the periodic, preferably wave-like, deformation of the filter elements (11) with respect to their longitudinal extension by the deformation unit (13, 14) during one revolution of the deformation unit (13, 14) relative to the filter elements (11) is greater, in particular by at least one greater, than the number of filter elements (11) being arranged one behind the other with respect to their longitudinal extention in the shape of a hollow cylinder.

25. Filter module (10) according to claims 18, 19 and 22, **characterized in that** the deformation unit (13, 14) touches the plurality of filter elements (11) on the inside thereof and that on the inside of the deformation unit (13, 14) a central drum (16) is arranged which is designed to press at least one roller (13) on each axis (14) frictionally outwards against the filter elements (11).

26. Filter module (10) according to at least one of claims 14 to 25, **characterized in that** the deformation unit is set up to deform at least a part of the walls of the filter elements which runs parallel to the longitudinal extension of the filter elements and along which two adjacent filter elements are connected to one another.

27. Method for binding particles from a particle-laden substance mixture, in particular from an aerosol or from a particle-laden fluid, with a filter module (10) according to at least one of claims 14 to 26, wherein the substance mixture is provided at at least one inlet (7) of at least one filter element (11) of the filter module (10), the medium (2) is deformed in the filter element (11) by the deformation unit (13, 14), the substance mixture is sucked into the filter element (11) at the at least one inlet (7), the substance mixture flows through the filter element (11) in the direction of the longitudinal extention thereof from the inlet (7) to the outlet (8), in this way particles from the substance mixture are bound in the medium (2), and the substance mixture, freed at least partially from particles, is pumped out at the outlet (8).

## Revendications

1. Module filtrant servant à lier des particules d'un mélange de substances dans au moins un milieu (2) avec un boîtier (1) cylindrique, dans lequel sont introduits :
un milieu (2) à pores ouverts cylindrique, de manière préférée cylindrique creux, lequel est réalisé pour maintenir un mélange de substances, en particulier un milieu spongieux, une mousse à pores ouverts et/ou un milieu filtrant pour un mélange de substances,
au moins une unité de déformation (4, 6), dans lequel le milieu (2) à pores ouverts peut être déformé de manière géométrique de manière préférée au moins le long de l'axe de cylindre du boîtier et/ou dans une direction radiale par l'unité de déformation (4, 6), ainsi
qu'au moins une entrée (7) et une sortie (8) pour un mélange de substances,
**caractérisé en ce que**
précisément une sortie (8) pour le mélange de substances est introduite dans le boîtier (1) cylindrique.

2. Module filtrant selon la revendication 1, **caractérisé en ce que** l'au moins une unité de déformation (4, 6) peut être déplacée par rapport au boîtier (1) et au milieu (2).

3. Module filtrant selon la revendication 2, **caractérisé en ce que** lors du déplacement relatif, l'au moins une unité de déformation (4, 6) est au repos et le boîtier (1) et le milieu (2) se déplacent ou que le boîtier (1) et le milieu (2) sont au repos et l'au moins une unité de déformation (4, 6) se déplace.

4. Module filtrant selon l'une quelconque des revendications précédentes, **caractérisé en ce que** le milieu (2) à pores ouverts cylindrique forme au moins deux, de manière préférée au moins quatre, de manière davantage préférée au moins six secteurs de cylindre (9).

5. Module filtrant selon la revendication 4, **caractérisé en ce que** respectivement des secteurs de cylindre (9) adjacents sont étanchéifiés les uns par rapport aux autres eu égard au mélange de substances de préférence par une gaine (3).

6. Module filtrant selon l'une quelconque des revendications précédentes, **caractérisé en ce que** l'au moins une entrée (7) et/ou la sortie (8) sont pratiquées respectivement dans un couvercle (5) du boîtier (1), dans lequel le couvercle (5) peut être couplé respectivement de manière préférée à l'unité de déformation (4, 6).

7. Module filtrant selon l'une quelconque des revendications précédentes, **caractérisé en ce que** l'unité de déformation (4, 6) présente une géométrie hélicoïdale, qui est réalisée pour exercer une action déformante sur le milieu (2) et déplace ainsi le mélange de substances à travers le milieu (2), à l'intérieur du milieu (2) et/ou hors du milieu (2).

8. Module filtrant selon la revendication 7, **caractérisé en ce que** l'unité de déformation (4, 6) est un arbre, une vis ou un corps en tuyau flexible et/ou présente au moins un excentrique (6).

9. Module filtrant selon l'une quelconque des revendications précédentes, **caractérisé en ce que** le milieu (2) est élastique et/ou compressible.

10. Module filtrant selon l'une quelconque des revendications précédentes, **caractérisé en ce que** le milieu (2) est un substrat ou un gel.

11. Procédé servant à lier des particules d'un mélange de substances dans au moins un milieu (2) par un module filtrant selon l'une quelconque des revendications précédentes, **caractérisé en ce que** sont effectuées au moins des étapes suivantes :
a. de fourniture du mélange de substances au niveau d'une des entrées (7) du boîtier (1) ;
b. d'aspiration du mélange de substances **en ce que** l'au moins une unité de déformation (4, 6) est déplacée par rapport au boîtier (1) et au milieu (2) ;
c. de liaison des particules dans le milieu (2) ;
d. d'évacuation par pompage du mélange de substances dépourvu au moins en partie de particules au niveau de la sortie (8) ;
e. de fin ou de poursuite avec f. ;
f. de remplacement du milieu (2) contre un autre milieu (2) ;
g. de poursuite avec a.

12. Système à modules filtrants composé d'au moins deux modules filtrants selon l'une quelconque des revendications 1 à 10, **caractérisé en ce que** les modules filtrants sont branchés les uns après les autres de telle manière que la sortie (8) d'un module filtrant est reliée avec transfert de force et de mélange de substances de manière amovible à une entrée (7) du module filtrant qui suit.

13. Procédé servant à lier des particules d'un mélange de substances dans au moins un milieu (2) par un système à modules filtrants selon la revendication 12,
**caractérisé en ce que** sont effectuées au moins des étapes suivantes :
a. de fourniture du mélange de substances au niveau d'une entrée (7) du premier module filtrant ;
b. d'évacuation par pompage du mélange de substances hors de chaque module filtrant au niveau de la sortie (8) respective et d'aspiration du mélange de substances dans le module filtrant qui suit respectivement au niveau d'une entrée (7) respective **en ce que** l'unité de déformation (4, 6) et/ou le couvercle (5) de chaque module filtrant sont déplacés conjointement par rapport au boîtier (1) et au milieu (2) du module filtrant respectif ;
c. de liaison des particules dans chaque module filtrant dans le milieu (2) respectif ;
d. d'évacuation par pompage du mélange de substances dépourvu au moins en partie de particules au niveau de la sortie (8) du dernier module filtrant ;
e. de fin ou de poursuite avec f. ;
f. de remplacement du milieu (2) dans au moins un module filtrant contre un autre milieu (2) ;
g. de poursuite avec a.

14. Module filtrant (10) servant à lier des particules issues d'un mélange de substances inhérent aux particules, en particulier issues d'un aérosol ou d'un fluide inhérent aux particules, présentant :
- une multitude d'éléments filtrants (11), dans lequel chaque élément filtrant (11) est rempli d'un milieu (2) cylindrique, à pores ouverts, de manière préférée cylindrique creux, lequel est réalisé pour maintenir un mélange de substances, en particulier d'un milieu spongieux, d'une mousse à pores ouverts, d'un gel, d'un solide moléculaire et/ou d'un milieu filtrant pour le mélange de substances et est entouré par une paroi (12) étanche pour le mélange de substances et pour le milieu (2) et présente au moins une entrée (7) et précisément une sortie (8) pour le mélange de substances, dans lequel chaque élément filtrant (11) peut être traversé par le mélange de substances en direction de son extension longitudinale depuis l'au moins une entrée (7) vers la sortie (8), et
- une unité de déformation (13, 14), dans lequel les éléments filtrants (11) et en particulier le milieu dans ceux-ci peuvent être déformés par l'unité de déformation (13, 14),
dans lequel les éléments filtrants (11) sont disposés côte à côte eu égard à leur extension longitudinale et des éléments filtrants (11) respectivement adjacents sont reliés les uns aux autres le long de leurs parties de leurs parois (12) respectives s'étendant de manière parallèle par rapport à leur extension longitudinale et tournées les unes vers les autres,
dans lequel l'unité de déformation (13, 14) est réalisée pour déformer les éléments filtrants (11) eu égard à leur extension longitudinale de manière périodique, de manière préférée de manière ondulée et de manière particulièrement préférée de manière sinusoïdale et dans lequel les déplacements de déformation des éléments filtrants (11) sont décalés en phase les uns par rapport aux autres.

15. Module filtrant (10) selon la revendication 14, **caractérisé en ce que** les déplacements de déformation des éléments filtrants (11) sont décalés en phase les uns par rapport aux autres de telle manière qu'il découle un déplacement de déformation périodique, de manière préférée ondulé, sur les éléments filtrants (11) disposés côte à côte le long d'une rangée d'emplacements à une hauteur identique eu égard à l'extension longitudinale des éléments filtrants (11).

16. Module filtrant (10) selon au moins l'une quelconque des revendications 14 à 15, **caractérisé en ce qu'**au moins une entrée (7) et/ou la sortie (8) d'au moins un élément filtrant (11) présentent sur la surface de l'élément filtrant (11) une forme étirée en longueur avec une extension longitudinale et/ou transversale dans une direction (L), qui se situe entre la direction (M) s'étendant de manière transversale par rapport à l'extension longitudinale de l'élément filtrant (11) et la direction de propagation (H) des fronts d'ondes, de préférence sur une bissectrice d'un angle entre les deux directions (M, H) mentionnées.

17. Module filtrant (10) selon au moins l'une quelconque des revendications 14 à 16, **caractérisé en ce que** le module filtrant (10) présente par ailleurs au moins un dispositif de fixation, en particulier au moins un bras oscillant (15), par lequel des parties des cloisons (12) des éléments filtrants, en particulier dans la zone des entrées (7) des entrées (7) des éléments filtrants (11), peuvent être fixées par rapport à au moins un point stationnaire à l'extérieur du module filtrant (10), en particulier avec une mobilité restreinte.

18. Module filtrant (10) selon au moins l'une quelconque des revendications 14 à 17, **caractérisé en ce que** l'unité de déformation (13, 14) présente une pluralité de rouleaux (13) avec des diamètres au moins en partie différents, qui sont mis au point pour rouler sur les éléments filtrants (11) le long de l'extension longitudinale des éléments filtrants (11) et pour déformer ce faisant au moins en partie avec une intensité différente les éléments filtrants (11).

19. Module filtrant (10) selon la revendication 18, **caractérisé en ce que** la pluralité de rouleaux (13) est disposée sur une multitude d'axes (14) en particulier parallèles.

20. Module filtrant (10) selon la revendication 19, **caractérisé en ce qu'**au moins un premier axe (14) et un deuxième axe (14) adjacent par rapport au premier axe (14) sont disposés de manière parallèle l'un par rapport à l'autre et que pour une paire composée d'un premier rouleau (13) disposé sur le premier axe (14) et d'un second rouleau (13) directement adjacent par rapport au premier rouleau (13) et disposé sur le deuxième axe (14), la distance entre les deux axes (14) est inférieure à la somme du rayon du premier rouleau (13) et du rayon du second rouleau (13).

21. Module filtrant (10) selon au moins l'une quelconque des revendications 14 à 20, **caractérisé en ce que** la multitude d'éléments filtrants (11) sont disposés au total de manière à présenter une forme de cylindre creux.

22. Module filtrant (10) selon la revendication 21, **caractérisé en ce que** l'unité de déformation (13, 14) présente une forme de cylindre creux, que l'unité de déformation (13, 14) touche la multitude d'éléments filtrants (11) sur son côté intérieur ou côté extérieur, et que les éléments filtrants (11) et l'unité de déformation (13, 14) sont réalisés pour tourner l'un par rapport à l'autre.

23. Module filtrant (10) selon la revendication 22, **caractérisé en ce que** le module filtrant (10) présente au moins deux éléments filtrants (11) disposés l'un après l'autre eu égard à leur extension longitudinale, en particulier que dans une direction axiale de la forme de cylindre creux, dans laquelle les éléments filtrants (11) sont disposés, un premier nombre d'éléments filtrants (11) sont disposés côte à côte eu égard à leur extension longitudinale et un deuxième nombre d'éléments filtrants (11), lequel est égal à au moins 2, sont disposés les uns après les autres eu égard à leur extension longitudinale dans la direction périphérique de la forme de cylindre creux, et que les au moins deux éléments filtrants (11) sont reliés l'un à l'autre le long de leurs parties de leurs parois (12) respectives s'étendant de manière transversale par rapport à leur extension longitudinale et tournées les unes vers les autres.

24. Module filtrant (10) selon la revendication 23, **caractérisé en ce que** le nombre des périodes de la déformation périodique, de manière préférée ondulée, des éléments filtrants (11) eu égard à leur extension longitudinale par l'unité de déformation (13, 14) est pendant une rotation complète de l'unité de déformation (13, 14) par rapport aux éléments filtrants (11) plus grand, en particulier plus grand d'au moins 1 que le nombre des éléments filtrants (11) disposés les uns après les autres de manière à présenter une forme de cylindre creux par rapport à leur extension longitudinale.

25. Module filtrant (10) selon les revendications 18, 19 et 22, **caractérisé en ce que** l'unité de déformation (13, 14) touche la multitude d'éléments filtrants (11) sur son côté intérieur, et qu'est disposé sur le côté intérieur de l'unité de déformation (13, 14) un cylindre (16) central, lequel est réalisé pour pousser sur chaque axe (14) respectivement au moins un rouleau (13) par friction vers l'extérieur contre les éléments filtrants (11).

26. Module filtrant (10) selon au moins l'une quelconque des revendications 14 à 25, **caractérisé en ce que** l'unité de déformation est mise au point pour déformer au moins une partie des parois des éléments filtrants s'étendant de manière parallèle par rapport à l'extension longitudinale des éléments filtrants, le long de laquelle deux éléments filtrants adjacents sont reliés l'un à l'autre.

27. Procédé servant à lier des particules issues d'un mélange de substances inhérent aux particules, en particulier issues d'un aérosol ou d'un fluide inhérent aux particules, avec un module filtrant (10) selon au moins l'une quelconque des revendications 14 à 26, dans lequel le mélange de substances est fourni au niveau d'au moins une entrée (7) d'au moins un élément filtrant (11) du module filtrant (10), le milieu (2) est déformé dans l'élément filtrant (11) par l'unité de déformation (13, 14), le mélange de substances est aspiré au niveau de l'au moins une entrée (7) dans l'élément filtrant (11), l'élément filtrant (11) est traversé par le mélange de substances en direction de son extension longitudinale depuis l'entrée (7) vers la sortie (8), des particules issues du mélange de substances sont liées ce faisant dans le milieu (2) et le mélange de substances dépourvu au moins en partie de particules est évacué par pompage au niveau de la sortie (8).
